# EUROPEAN PATENT SPECIFICATION

(11) **EP 4 073 600 B1**
(45) Date of publication and mention of the grant of the patent: **31.07.2024**
(21) Application number: 20838766.2
(22) Date of filing: 10.12.2020
(51) Int. Cl.: G05B 15/02, G05B 23/02, F24F 11/52, G06F 3/048

(54) **HIERACHICAL BUILDING PERFORMANCE DASHBOARD WITH KEY PERFORMANCE INDICATORS ALONGSIDE RELEVANT SERVICE CASES**
HIERARCHISCHES GEBÄUDELEISTUNGSARMATURENBRETT MIT SCHLÜSSELLEISTUNGSANZEIGE NEBEN RELEVANTEN SERVICEFÄLLEN
TABLEAU DE BORD HIÉRARCHIQUE DE PERFORMANCES DE BÂTIMENT AVEC INDICATEURS CLÉS DE PERFORMANCES PARALLÈLEMENT À DES CAS DE SERVICE PERTINENTS

(30) Priority: 10.12.2019 US 201962946189 P
(43) Date of publication of application: 19.10.2022
(73) Proprietor: HONEYWELL INTERNATIONAL INC., Charlotte, NC 28202 (US)
(72) Inventor: LO, Andrew, Charlotte, North Carolina 28202 (US); PARMAR, Ashish, Charlotte, North Carolina 28202 (US); BOOTHROYD, John, Charlotte, North Carolina 28202 (US); SCHERF, Ronny, Charlotte, North Carolina 28202 (US); TARANATH, Manu, Charlotte, North Carolina 28202 (US)
(74) Representative: Houghton, Mark Phillip
(86) International application number: PCT/US2020/064332
(87) International publication number: WO 2021/119328

(56) References cited:
- EP-A1- 3 321 863
- US-A1- 2015 088 312

## Description

### Related Application

This application claims the benefit of U.S. Provisional Application Serial No. 62/946,189, filed on December 10, 2019.

### Technical Field

The present disclosure relates generally to building performance, and more particularly to systems and methods for efficiently monitoring building performance.

### Background

Building management systems can control operation of a variety of different building systems including but not limited to Heating, Ventilating and Air Conditioning (HVAC) systems, security systems, lighting systems and the like. These building management systems can receive a substantial volume of data from the systems that they are managing. This volume of data can easily overwhelm a person responsible for monitoring the performance of one or more systems in their building or other facility. Accordingly, there is a desire for improved ways of displaying relevant information in a building dashboard. US2015088312 A1 20150326 discloses a smart building management system that manages a building.

### Summary

The present disclosure relates generally to building performance, and more particularly to systems and methods for efficiently monitoring building performance. In some instances, a hierarchal building performance dashboard may be provided that interactively displays Key Performance Indicators (KPIs) alongside relevant service cases. This provides an operator with an intuitive and easy way to drill down from a top level KPI to identify components and service cases that are causing the top level KPI to underperform.

The invention is defined by the appended claims. An example is a method for monitoring performance of a building system of a building based on one or more Key Performance Indicators (KPIs), where each of the one or more KPIs representing a corresponding measure of building performance. The building system includes a plurality of building system components that are responsible for maintaining building performance. A dashboard having a plurality of selectable hierarchical dashboard levels is displayed on a display, where a higher dashboard level of the dashboard displays a KPI, and the KPI on the higher dashboard level represents an aggregation of a plurality of related KPI's at a next lower dashboard level. The dashboard also displays service cases that are related to one or more of the building system components of the building. The service cases displayed at the next lower dashboard level are identified as having a negative impact on at least one of the plurality of related KPI's also displayed at the next lower dashboard level. In this example, the service cases displayed on the higher dashboard level represent an aggregation of the service cases displayed at the next lower dashboard level and that are identified as having a negative impact on the KPI displayed on the higher dashboard level.

Another example is a method for monitoring performance of a building system based on one or more Key Performance Indicators (KPIs), where each of the one or more KPIs representing a corresponding measure of building performance. The building system includes a plurality of building system components that are responsible for maintaining building performance. Operational data is received from one or more of the plurality of building system components and is analyzed to detect operational faults. A first dashboard level that includes a graphical representation of the one or more KPIs is displayed on a display, with each graphical representation illustrating performance of a corresponding one of the one or more KPIs over a period of time. A user is allowed to select one of the graphical representations of the one or more KPIs, thereby indicating that the user wants additional information regarding the KPI represented by the graphical representation. In response to a user selecting one of the graphical representations, a second dashboard level that provides additional information regarding the KPI represented by the selected graphical representation is displayed, including one or more service cases that are identified as having a negative impact on the KPI represented by the selected graphical representation. Each service case may correspond to one or more of the one or more faults. The user is allowed to select one of the service cases, and in response, a third dashboard level is displayed that provides additional information regarding the selected service case.

Another example is a method for monitoring performance of a building system of a building based on one or more Key Performance Indicators (KPIs), where each of the one or more KPIs representing a corresponding measure of building performance. The building system includes a plurality of building system components that are responsible for maintaining building performance. A dashboard is generated on a display, where the display includes a plurality of selectable hierarchical levels, each of the hierarchical levels including at least one associated KPI of the one or more KPIs. The at least one KPI that is associated with a particular hierarchical level in the plurality of hierarchical levels comprising an aggregation of one or more related KPIs associated with a next lower hierarchical level of the plurality of hierarchical levels. One or more service cases are received. The service cases relate to one or more faults in one or more of the plurality of building system components of the building system. An impact, if any, of the one or more service cases on each of the one or more KPIs is determined, wherein the service cases that are determined to have an impact on the at least one KPI that is associated with the particular hierarchical level of the plurality of hierarchical levels includes an aggregation of one or more service cases determined to have an impact on the one or more related KPIs associated with the next lower hierarchical level of the plurality of hierarchical levels. A first user input selecting the particular hierarchical level of the plurality of hierarchical levels of the dashboard is received, and in response, displaying at the particular hierarchical level of the plurality of hierarchical levels of the dashboard both the at least one KPI associated with the particular hierarchical level of the plurality of hierarchical levels of the dashboard and the one or more service cases that are determined to have an impact on the at least one KPI associated with the particular hierarchical level. A second user input selecting the next lower hierarchical level of the plurality of hierarchical levels of the dashboard is received. In response to the received second input, displaying at the next lower hierarchical level of the plurality of hierarchical levels of the dashboard both the one or more related KPIs associate with the next lower hierarchical level of the plurality of hierarchical levels and the one or more service cases that are determined to have an impact on the one or more related KPIs associated with the next lower hierarchical level of the plurality of hierarchical levels.

Another example is a method for monitoring performance of a building system based on one or more Key Performance Indicators (KPIs), where each of the one or more KPIs representing a corresponding measure of building performance. The building system including a plurality of building system components that are responsible for maintaining building performance. One or more service cases are received. The service cases relating to one or more faults in one or more of the plurality of building system components of the building system. An impact, if any, of the one or more service cases on each of the one or more KPIs is determined. A hierarchical dashboard is generated on a display, wherein the hierarchical dashboard has a plurality of hierarchical levels. At least two of the hierarchical levels include at least one associated KPI of the one or more KPIs. A first user input selecting a KPI at one of the hierarchical levels of the hierarchical dashboard is received, indicating that the user wants additional information regarding the selected KPI. In response, a next lower hierarchical level of the plurality of hierarchical levels of the hierarchical dashboard is displayed. The next lower hierarchical level providing additional information regarding the selected KPI, including one or more service cases that are determined to impact the selected KPI. A second user input selecting one of the service cases is received. In response, additional information regarding the selected service case is displayed.

Another example is a system for use in monitoring performance of a building system of a building based on one or more Key Performance Indicators (KPIs), where each of the one or more KPIs represents a corresponding measure of building performance and the building system includes a plurality of building system components that are responsible for maintaining building performance. The system includes a receiver for receiving operational data from the building system, a user input device, a display and a processor that is operatively coupled to the receiver, the user input device and the display. The processor is configured to display a dashboard on the display, where the dashboard has a plurality of selectable hierarchical dashboard levels. A higher dashboard level of the dashboard displays a KPI, where the KPI on the higher dashboard level represents an aggregation of a plurality of related KPI's at a lower dashboard level. Service cases related to one or more of the building system components of the building are displayed on the dashboard. The service cases displayed at the next lower dashboard level are identified by the processor as having a negative impact on at least one of the plurality of related KPI's displayed at the next lower dashboard level and the service cases displayed on the higher dashboard level represent an aggregation of the service cases displayed at the next lower dashboard level and are identified as having a negative impact on the KPI displayed on the higher dashboard level. In some cases, the processor is adapted to accept a user input via the user input, wherein the user input selects a level of the plurality of selectable hierarchal dashboard levels. Service cases are then displayed that are related to the selected level of the plurality of selectable hierarchal dashboard levels.

Another example is a system for use in monitoring performance of a building system of a building based on one or more Key Performance Indicators (KPIs), where each of the one or more KPIs representing a corresponding measure of building performance. The building system including a plurality of building system components that are responsible for maintaining building performance. The system includes a receiver for receiving operational data from the building system, a user input device, a display and a processor that is operatively coupled to the receiver, the user input device and the display. The processor is configured to generate a dashboard on the display, wherein the dashboard has a plurality of selectable hierarchical levels, each of the hierarchical levels including at least one associated KPI of the one or more KPIs. The at least one KPI that is associated with a particular hierarchical level in the plurality of hierarchical levels includes an aggregation of one or more related KPIs associated with a next lower hierarchical level of the plurality of hierarchical levels.

In this example, the processor is configured to receive one or more service cases. The service cases relate to one or more faults in one or more of the plurality of building system components of the building system. The processor may determine an impact, if any, of the one or more service cases on each of the one or more KPIs. The service cases that are determined to have an impact on the at least one KPI that is associated with the particular hierarchical level of the plurality of hierarchical levels include an aggregation of one or more service cases determined to have an impact on the one or more related KPIs associated with the next lower hierarchical level of the plurality of hierarchical levels. The processor is further configured to receive a user input, via the user input device, a first user input selecting the particular hierarchical level of the plurality of hierarchical levels of the dashboard, and in response, display at the particular hierarchical level of the plurality of hierarchical levels of the dashboard both the at least one KPI associated with the particular hierarchical level of the plurality of hierarchical levels of the dashboard and the one or more service cases that are determined to have an impact on the at least one KPI associated with the particular hierarchical level

In this example, the processor is further configured to receive a second user input, via the user input device. The second user input selecting the next lower hierarchical level of the plurality of hierarchical levels of the dashboard. In response to the second input, the processor displays the next lower hierarchical level of the plurality of hierarchical levels of the dashboard, where the next lower hierarchical level of the plurality of hierarchical levels of the dashboard includes both the one or more related KPIs associate with the next lower hierarchical level of the plurality of hierarchical levels and the one or more service cases that are determined to have an impact on the one or more related KPIs associated with the next lower hierarchical level of the plurality of hierarchical levels.

The preceding summary is provided to facilitate an understanding of some of the features of the present disclosure and is not intended to be a full description. A full appreciation of the disclosure can be gained by taking the entire specification, claims, drawings, and abstract as a whole.

### Brief Description of the Drawings

The disclosure may be more completely understood in consideration of the following description of various illustrative embodiments of the disclosure in connection with the accompanying drawings, in which:
Figure 1 is a schematic block diagram of an illustrative system for monitoring performance of a building system of a building;
Figure 2 is a schematic block diagram showing an illustrative method for monitoring performance of a building system;
Figure 3 is a schematic diagram showing relationships between KPIs and service cases;
Figure 4 is a schematic diagram showing how illustrative asset KPIs are determined;
Figure 5 is a flow diagram showing an illustrative method;
Figure 6 is a flow diagram showing an illustrative method;
Figure 7 is a flow diagram showing an illustrative method;
Figure 8 is a flow diagram showing an illustrative method;
Figure 9 is a flow diagram showing an illustrative method;
Figure 10 is a schematic illustration of a logical representation of a building system;
Figures 11 through 16 are illustrative screen shots of an illustrative dashboard; and
Figures 17 through 22 are illustrative screen shots of an illustrative dashboard.

While the disclosure is amenable to various modifications and alternative forms, specifics thereof have been shown by way of example in the drawings and will be described in detail. It should be understood, however, that the intention is not to limit aspects of the disclosure to the particular illustrative embodiments described.

### Description

The following description should be read with reference to the drawings wherein like reference numerals indicate like elements. The drawings, which are not necessarily to scale, are not intended to limit the scope of the disclosure. In some of the figures, elements not believed necessary to an understanding of relationships among illustrated components may have been omitted for clarity.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic may be applied to other embodiments whether or not explicitly described unless clearly stated to the contrary.

While the present disclosure uses monitoring the performance of a building system, it is contemplated that the disclosure may be applied to any suitable performance monitoring application. For example, the present disclosure can be used to monitor the performance of an industrial process (e.g. refinery, manufacturing process, etc.) that has KPI's representing measures of industrial process performance. The industrial process may include a plurality of industrial process components that are responsible for maintaining the performance of the industrial process. A dashboard, such as disclosed herein, may be used by an operator to monitor the performance of the industrial process and quickly identify services cases that have an impact on underperforming KPI's.

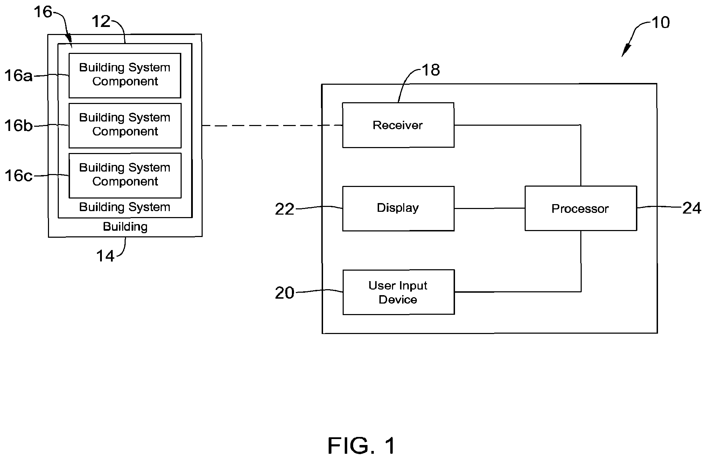

Figure 1 is a schematic block diagram of an illustrative system 10 for use in monitoring the performance of a building system 12 of a building 14. The building 14 may represent an entire facility. In some instances, the building 14 may represent a portion of a facility, such as a floor of a large facility or other portion of a large facility. The building 14 may represent a campus that includes two or more distinct buildings arranged about a geographic area. Many business campuses include a plurality of distinct buildings that can be collectively operated and managed. A college campus is another example of a plurality of distinct buildings that can be collectively operated and managed.

The building system 12 includes a plurality of building system components 16 that are individually labeled as 16a, 16b and 16c. This is merely illustrative, as the building system 12 will generally include a much higher number of different building system components 16. Some of the building system components 16 may include pieces of equipment that directly impact building performance such as but not limited to actuators, air handlers and the like while others of the building system components 16 may represent controllers that regulate operation of the pieces of equipment. Still others of the building system components 16 may represent sensors that provide feedback or other input to the controllers to assist the controllers in operating the pieces of equipment that directly impact building performance. The building system 12 may represent any of a variety of different types of building systems. Examples include Heating, Ventilating and Air Conditioning (HVAC) systems, in which case the building system components 16 may include air handlers and sources of heated and cooled fluids. Additional examples include security systems and lighting systems.

The system 10 may be configured to monitor performance of the building system 12 in accordance with one or more Key Performance Indicators (KPIs), where each KPI represents a corresponding measure of building performance for the building 14. The system 10 includes a receiver 18 for receiving operational data from the building system 12. The operational data may, for example, include current values for a variety of different parameters as provided by at least some of the building system components 16. The operational data that is received by the receiver 18 may also include desired set points and other thresholds that provide an indication of what the current values for the variety of different parameters should be.

The illustrative system 10 includes a user input device 20. In some cases, the user input device 20 may be used to accept various inputs from a user that dictated what may be displayed on a display 22. The user input device 20 may include any device that allows a user to enter information. The user input device 20 may include a keyboard and/or mouse that is operably coupled with a computer such as a desktop or a laptop. The user input device 20 may include a touch pad that allows a user to slide a finger around the touch pad to select particular items, for example. The display 22 may be any device that allows information to be displayed. The display 22 may include a flat screen computer monitor, for example. The display 22 may include a display screen that is built into a laptop computer.

The system 10 also includes a processor 24 that is operatively coupled to the receiver 18, the user input device 20 and to the display 22. The processor 24 may represent one or more processors that are present within a computer such as a desktop computer or a laptop computer. The processor 24 may represent one or more processors that are within a server. In some instances, the processor 24 may be manifested within a cloud-based server, but this is not required. The processor 24 may include one or more micro-processors.

The processor 24 is configured to display a dashboard on the display 22, wherein the dashboard has a plurality of selectable hierarchical dashboard levels. In some instances, a higher dashboard level of the dashboard displays a KPI, where the KPI on the higher dashboard level represents an aggregation of a plurality of related KPI's at a lower dashboard level. The processor 24 is configured to accept a user input via the user input device 20 that selects a level of the plurality of selectable hierarchal dashboard levels. The processor 24 is configured to display service cases related to the selected level of the plurality of selectable hierarchal dashboard levels on the dashboard. In some cases, the service cases displayed at the selected level of the plurality of selectable dashboard levels are identified as having a negative impact on at least one of the plurality of related KPI's displayed at the next lower dashboard level. In some cases, the service cases displayed on the higher dashboard level represent an aggregation of the service cases displayed at the next lower dashboard level and are identified as having a negative impact on the KPI displayed on the higher dashboard level. In some cases, the processor 24 may also be configured to detect operational faults in the operational data received from the building system 12.

In some cases, the processor 24 is configured to generate a dashboard on a display, wherein the dashboard has a plurality of selectable hierarchical levels. Each of the hierarchical levels may include at least one associated KPI of the one or more KPIs. In some instances, the at least one KPI that is associated with a particular hierarchical level in the plurality of hierarchical levels includes an aggregation of one or more related KPIs associated with a next lower hierarchical level of the plurality of hierarchical levels. The processor 24 may be configured to receive one or more service cases, wherein the service cases relate to one or more faults in one or more of the plurality of building system components of the building system. In this example, the processor 24 is configured to determine an impact, if any, of the one or more service cases on each of the one or more KPIs, wherein the service cases that are determined to have an impact on the at least one KPI that is associated with the particular hierarchical level of the plurality of hierarchical levels includes an aggregation of one or more service cases determined to have an impact on the one or more related KPIs associated with the next lower hierarchical level of the plurality of hierarchical levels.

The processor 24 may be configured to receive a user input, via the user input device. A first user input may include selecting the particular hierarchical level of the plurality of hierarchical levels of the dashboard. In response to the first user input, the processor 24 may display at the particular hierarchical level of the plurality of hierarchical levels of the dashboard both the at least one KPI associated with the particular hierarchical level of the plurality of hierarchical levels of the dashboard and the one or more service cases that are determined to have an impact on the at least one KPI associated with the particular hierarchical level.

The processor 24 may be configured to receive a second user input, via the user input device. The second user input may select the next lower hierarchical level of the plurality of hierarchical levels of the dashboard. In response to the second user input, the processor 24 may display at the next lower hierarchical level of the plurality of hierarchical levels of the dashboard both the one or more related KPIs associate with the next lower hierarchical level of the plurality of hierarchical levels and the one or more service cases that are determined to have an impact on the one or more related KPIs associated with the next lower hierarchical level of the plurality of hierarchical levels.

The processor 24 may be configured to receive a third user input selecting at least one of a plurality of filtering criteria. The processor 24 may then filter the one or more service cases based on the at least on selected filtering criteria. The processor 24 may be configured to, in response to the first user input, display at the particular hierarchical level of the plurality of hierarchical levels of the dashboard those service cases that are determined to have an impact on the at least one KPI associated with the particular hierarchical level and that satisfy the at least one selected filtering criteria. The processor 24 may be configured to detect one or more faults via the operational data received from the building system, and to generate one or more service cases to correct the detected one or more faults. Additional capabilities and functions of the processor 24 may be gleaned from the methods described herein.

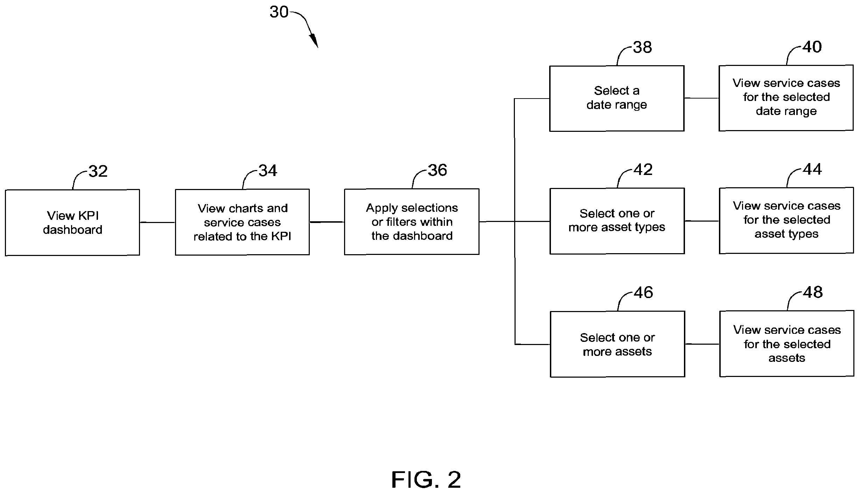

Figure 2 is a schematic block diagram showing an illustrative method 30 for monitoring performance. As indicated at block 32, a KPI dashboard may be viewed. In some instances, and as indicated at block 34, charts and service cases that are related to the KPI may be viewed. Selections or filters may be applied within the dashboard, as indicated at block 36. The selections or filters include several options. For example, as indicated at block 38, a date (or time) range may be selected and in response, service cases for the selected date (or time) range may be viewed, as indicated at block 40. As indicated at block 42, one or more asset types may be selected and in response, service cases for the selected asset types may be viewed, as indicated at block 44. In the case of a building system, the building system components may be considered assets. As indicated at block 46, one or more assets may be selected and in response, service cases for the selected one or more assets may be viewed, as indicated at block 48.

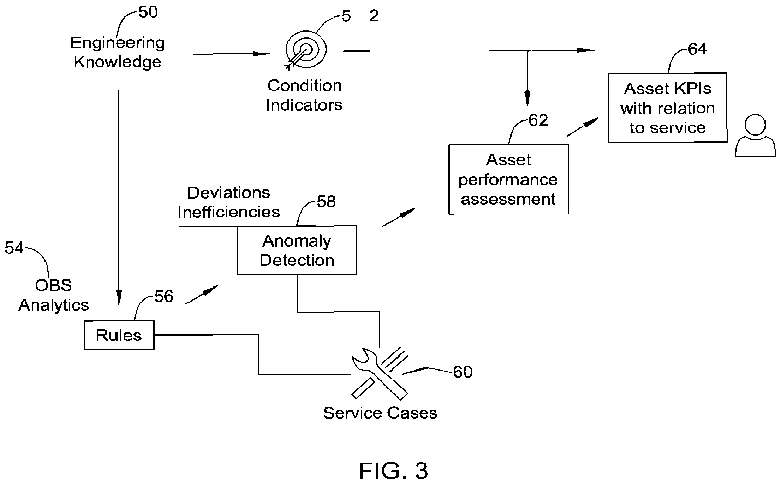

Figure 3 is a schematic diagram showing relationships between KPIs and service cases, and how a facility manager may gain a greater understanding of the interaction therebetween. Engineering knowledge 50 and know-how of service technicians is captured in a set of rules 56. Building operational data is received and the rules 56 are applied against the building operational data to identify faults in the building system. In one example, the building operational data may include zone temperatures and zone setpoints. The mode of the equipment servicing the various zones may also be included. When a particular zone is in a cooling mode, and the zone temperature exceeds the zone temperature by a threshold amount, a rule may be triggered. The rule may capture engineering knowledge 50 and know-how of service technicians to identify this condition as a "cooling valve stuck" fault. The rule may also identify a symptom such as "Zone Hot in Full Cooling - Zone temp is higher than setpoint by 2°C", a result such as "Comfort within the zone which is served by the asset is at risk, most probably the zone temperature cannot be kept" and an impact on the relevant KPI such as "Comfort Performance Indicator (KPI) will go down". Faults in a building system that do impact valves, actuators, heating or cooling coils will typically cause under-performing comfort KPIs. Faults like oscillation in control typically will typically cause under-performing energy and/or asset lifetime KPIs.

Rules 56 may distill years of experience in relating faults to root causes and resulting impacts on comfort, energy consumption and other KPIs, are provide a source of service cases 60. In the example shown, anomaly Detection 58 employs machine learning (MI) algorithms to study operational data looking for situations that are outside of what is expected. As an example, if the performance efficiency of a chiller suddenly or gradually drops below an expected threshold, even if no faults are detected, this may be characterized as an anomaly. The Anomaly Detection 58 may itself also include a set of rules or the like that relate detected anomalies with both root causes and resulting impacts on comfort, energy consumption and other KPIs, which in turn provides another source of service cases 60.

Asset performance assessment 62 may include assigning an availability KPI for each asset. For example, in one example, if a particular asset (e.g. building component) has zero faults for a period of time, the asset availability would be determined to be 100% for that period of time. The corresponding KPI for that asset would also have a value of 100%. If a particular asset has one or more faults that span 50% of the period of time, the asset availability would be determined to be 50% for that period of time, and the corresponding KPI for that asset would be 50%. In some cases, the asset availability provides an indication of the relative fraction of time (during the period of time) that the particular asset is operating without any detected faults. An Asset KPIs with Relation to Service block 64 represents the output given to a facilities manager, in the form of one or more KPI's included in a hierarchal dashboard.

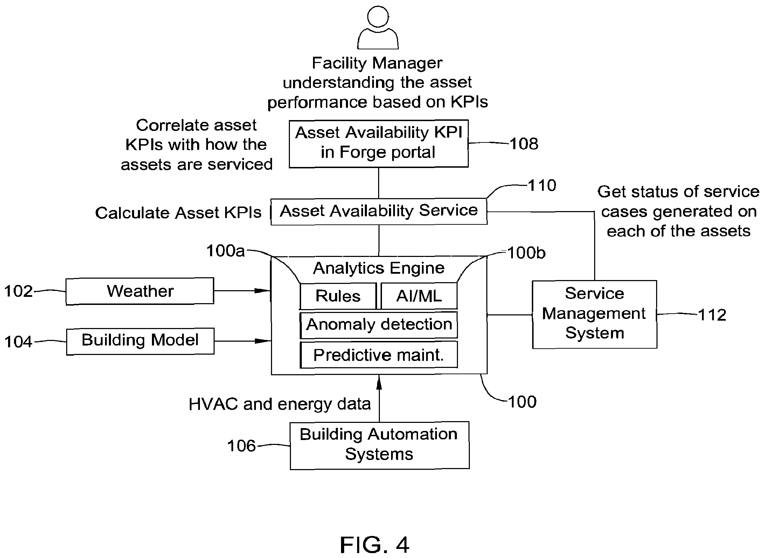

Figure 4 is a schematic diagram showing how illustrative asset KPIs are determined. Data flow is as follows. Telemetry data is collected and the data is modeled in order to create a virtual building model that includes all assets, related points and supply relationships. In some cases, both the telemetry data and the resulting virtual building model may be stored in the cloud. Rules are used to analyze the data and identify faults. The impacts of those faults are determined from the rule or rules that triggered the fault. KPIs are calculated across zones and assets and are presented in a dashboard that include the KPIs, sometimes with links to the faults.

In the example shown, an Analytics Engine 100 receives information from a weather block 102, a building model 104 (which stores the virtual model) and a operational data form a Building Automation System 106. The Analytics Engine 100 includes a Rules block 100a that stores and applies the rules to operational data, as well as an AI/ML (Artificial Intelligence/Machine Learning) block 100b that analyzes operational data to detect anomalies in operation. Both the Rules block 100a and the AI/ML block 100b may output one or more service cases. The Service Management System 112 may maintain and track the status of generated service cases. An Asset Availability block 108 correlates asset KPIs with how the assets are serviced. The Asset Availability Service 110 calculates Asset KPIs based on the asset KPIs provided by the Asset Availability block 108 as discussed above with respect to the Anomaly Detection 58, as well as the status of the service cases provided by the Service Management System 112. The analytics engine 100 may also determine an impact, if any, of the one or more service cases on each of the one or more KPIs. In some cases, the analytics engine 100 may determine a root cause of each of the one or more faults/service cases.

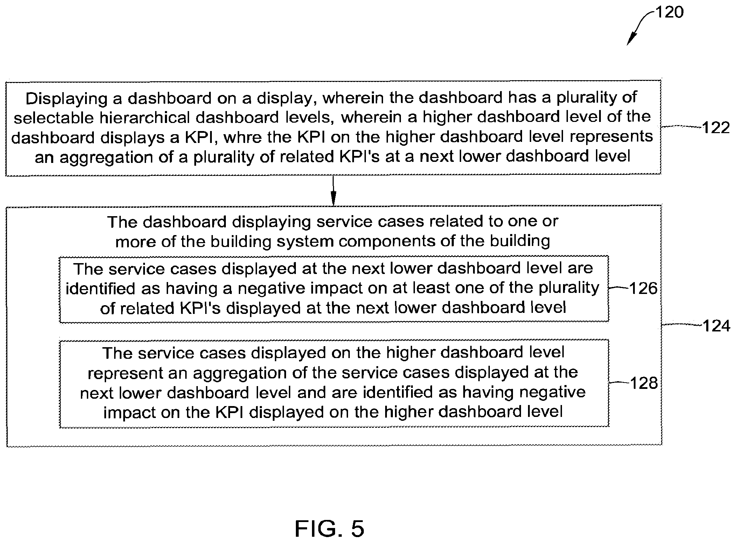

Figure 5 is a flow diagram showing an illustrative method 120 for monitoring performance of a building system (such as the building system 12) of a building (such as the building 14) based on one or more Key Performance Indicators (KPIs), each of the one or more KPIs representing a corresponding measure of building performance. The KPIs may, for example, include a Comfort KPI, an Energy KPI, a Health KPI and/or a Financial Performance KPI, among others. The building system may be an HVAC system. A dashboard is displayed on a display (such as the display 22). The dashboard may have a plurality of selectable hierarchal dashboard levels. In some cases, at least two of the plurality of selectable hierarchical dashboard levels are displayed on a common screen. In some instances, at least two of the plurality of selectable hierarchical dashboard levels are displayed on separate screens.

In some cases, a higher dashboard level of the dashboard displays a KPI, where the KPI on the higher dashboard level represents an aggregation of a plurality of related KPIs at a next lower dashboard level, as indicated at block 122. The dashboard also displays service cases that are related to one or more of the building system components of the building, as indicated at block 124. The service cases displayed at the next lower dashboard level are identified as having a negative performance impact on at least one of the plurality of related KPI's displayed at the next lower dashboard level, as indicated at block 126. In some cases, the service cases displayed on the higher dashboard level represent an aggregation of the service cases displayed at the next lower dashboard level and are identified as having a negative impact on the KPI displayed on the higher dashboard level, as indicated at block 128.

At least some of the services cases displayed at the next lower dashboard level may relate to a root cause of the identified negative impact on one or more of the plurality of related KPI's displayed at the next lower dashboard level. At least some of the services cases displayed at the higher dashboard level may relate to a root cause of the identified negative impact on the KPI displayed on the higher dashboard level.

In one example, the KPI on the higher dashboard level may represent a measure of performance of the building system, and wherein each of the plurality of related KPI's at the next lower dashboard level represent a corresponding zone of the building system. In another example, the KPI on the higher dashboard level may represent a particular zone of the building system, and each of the plurality of related KPI's at the next lower dashboard level represent a corresponding building system component servicing the particular zone of the building system. Service cases that are not identified as having a negative impact on at least one of the plurality of related KPI's displayed at the next lower dashboard level are not displayed at the next lower dashboard level. Service cases that are not identified as having a negative impact on the KPI displayed on the higher dashboard level are not displayed at the higher dashboard level.

In some cases, the dashboard may include a filter that, when activated, filters the service cases so only those service cases that meet selected filter criteria are displayed on the dashboard. The selected filter criteria may include a selected date or time range where only those service cases that are active within the selected date or time range are displayed on the dashboard. The selected filter criteria may include a service case status where only those service cases that have the selected service case status are displayed on the dashboard. Examiner service case status may include, for example, assigned to a technician, in-progress and completed, The selected filter criteria may include a building component type where only those service cases that relate to a selected building component type are displayed on the dashboard. Service cases may, for example, relate to faults in one or more of the plurality of building system components. These are just examples.

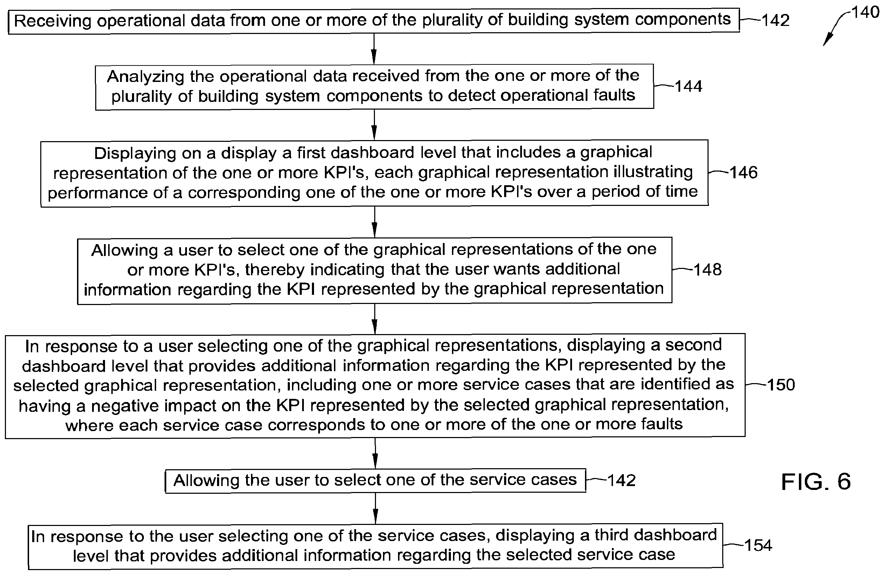

Figure 6 is a flow diagram showing an illustrative method 140 for monitoring performance of a building system (such as the building system 12) based on one or more Key Performance Indicators (KPIs), each of the one or more KPIs representing a corresponding measure of building performance. In this example, the building system includes a plurality of building system components that are responsible for maintaining building performance. Operational data is received from one or more of the plurality of building system components, as indicated at block 142. The operational data received from the one or more of the plurality of building system components is analyzed to detect operational faults, as indicated at block 144. A first dashboard level that includes a graphical representation of the one or more KPIs is displayed on a display. Each graphical representation illustrating performance of a corresponding one of the one or more KPIs over a period of time, as indicated at block 146. A user is allowed to select one of the graphical representations of the one or more KPIs, thereby indicating that the user wants additional information regarding the KPI represented by the graphical representation, as indicated at block 148. In response to a user selecting one of the graphical representations, a second dashboard level that provides additional information regarding the KPI represented by the selected graphical representation is displayed, including one or more service cases that are identified as having a negative impact on the KPI represented by the selected graphical representation, where each service case corresponds to one or more of the one or more faults, as indicated at block 150. The user is allowed to select one of the service cases, as indicated at block 152. In response to the user selecting one of the service cases, a third dashboard level (or other screen, region or window) is displayed that provides additional information regarding the selected service case is displayed.

In some cases, at least two of the first dashboard level, the second dashboard level and the third dashboard level are displayed on separate screens. At least some of the one or more services cases may relate to a root cause of the identified negative impact on the KPI represented by the selected graphical representation. The additional information provided by the second dashboard level may include a plurality of selectable sub-KPI's that are related to the KPI represented by the selected graphical representation, and when a particular sub-KPI is selected, displaying an additional dashboard level that provides additional information regarding the selected sub-KPI including one or more service cases that are identified as having a negative impact on the selected sub-KPI.

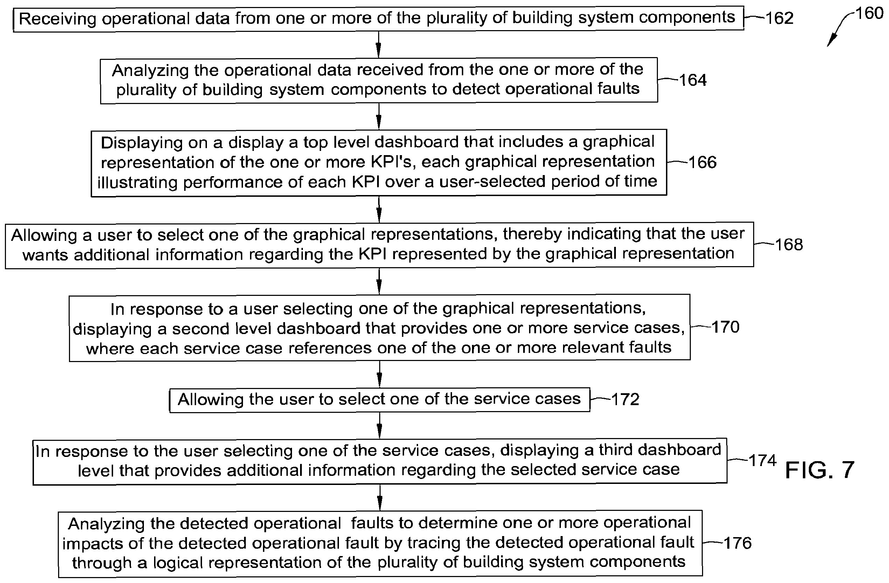

Figure 7 is a flow diagram showing an illustrative method 160 for monitoring performance of a building system (such as the building system 12) based on one or more Key Performance Indicators (KPIs) including one or more of a Comfort KPI, an energy KPI, a maintenance KPI and an asset performance KPI. The building system includes a plurality of building system components (such as the building system components 16). Operational data is received from one or more of the plurality of building system components as indicated at block 162. The operational data received from the one or more of the plurality of building system components is analyzed to detect operational faults, as indicated at block 164. A top level dashboard that includes a graphical representation of the one or more KPIs is displayed on a display, each graphical representation illustrating performance of each KPI over a user-selected period of time, as indicated at block 166. A user is allowed to select one of the graphical representations, thereby indicating that the user wants additional information regarding the KPI represented by the graphical representation, as indicated at block 168. In response, and as indicated at block 170, a second level dashboard is displayed that provides one or more service cases, where each service case references one of the one or more relevant faults.

The user may be able to filter the displayed service cases using one or more of location, value type and timeline as a filter. For example, the user may be able to filter the displayed service cases such that only certain service cases are displayed. The user may be able to filter the displayed service cases such that only in-progress service cases are displayed. The user may be able to filter the displayed service cases such that only service cases that were completed within a user-selectable period of time are displayed. These are just examples.

The user is allowed to select one of the service cases, as indicated at block 172. In response to the user selecting one of the service cases, a third level dashboard (or other screen, region or window) may be displayed that provides additional information regarding the selected service case is displayed, as indicated at block 174. In some cases, displaying the third level dashboard may include displaying service cases that are relevant to the detected operational fault.

In some instances, and as indicated at block 176, the method 160 may further include analyzing the detected operational faults to determine one or more operational impacts of the detected operational fault by tracing the detected operational fault through a logical representation of the plurality of building system components. The logical representation of the plurality of building system components may include relationships between building system components that are pieces of equipment and building system components that are controllers controlling the pieces of equipment. Displaying the third level dashboard may include displaying service cases relevant to the detected operational fault and/or displaying service cases that indicate the one or more operational impacts of the detected operational fault.

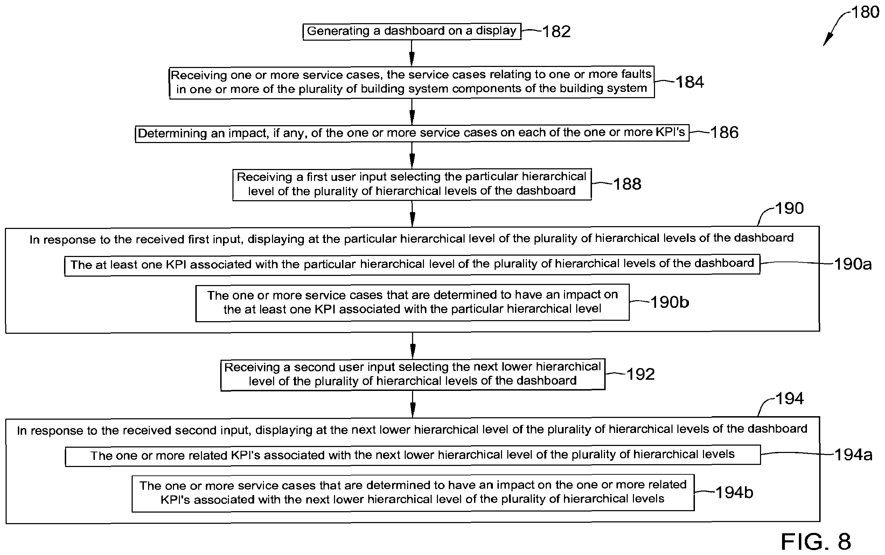

Figure 8 is a flow diagram showing an illustrative method 180 for monitoring performance of a building system (such as the building system 12) of a building (such as the building 14) based on one or more Key Performance Indicators (KPIs), each of the one or more KPIs representing a corresponding measure of building performance. The building system includes a plurality of building system components (such as the building system components 16) that are responsible for maintaining building performance. A dashboard is generated on a display, as indicated at block 182. The dashboard has a plurality of selectable hierarchical levels, each of the hierarchical levels including at least one associated KPI of the one or more KPIs, the at least one KPI that is associated with a particular hierarchical level in the plurality of hierarchical levels including an aggregation of one or more related KPIs associated with a next lower hierarchical level of the plurality of hierarchical levels. One or more service cases are received that relate to one or more faults in one or more of the plurality of building system components of the building system, as indicated at block 184.

An impact, if any, of the one or more service cases on each of the one or more KPIs is determined, as indicated at block 186. In some cases, the service cases that are determined to have an impact on the at least one KPI that is associated with the particular hierarchical level of the plurality of hierarchical levels include an aggregation of one or more service cases determined to have an impact on the one or more related KPIs associated with the next lower hierarchical level of the plurality of hierarchical levels. A first user input selecting the particular hierarchical level of the plurality of hierarchical levels of the dashboard is received, as indicated at block 188. In response, and as indicated at block 190, 190a and 190b, the at least one KPI associated with the particular hierarchical level of the plurality of hierarchical levels of the dashboard and the one or more service cases that are determined to have an impact on the at least one KPI associated with the particular hierarchical level are displayed at the particular hierarchal level of the plurality of hierarchal levels of the dashboard.

A second user input selecting the next lower hierarchical level of the plurality of hierarchical levels of the dashboard is received, as indicated at block 192. In response, and as indicated at block 192, 192a and 192b, the one or more related KPIs associate with the next lower hierarchical level of the plurality of hierarchical levels and the one or more service cases that are determined to have an impact on the one or more related KPIs associated with the next lower hierarchical level of the plurality of hierarchical levels are both displayed at the next lower hierarchical level of the plurality of hierarchical levels of the dashboard.

In some instances, a third user input selecting at least one of a plurality of filtering criteria may be selected and the one or more service cases may be filtered based on the at least on selected filtering criteria of the plurality of filtering criteria. In some cases, and in response to the first user input, those service cases that are determined to have an impact on the at least one KPI associated with the particular hierarchical level and that satisfy the at least one selected filtering criteria may be displayed at the particular hierarchical level of the plurality of hierarchical levels of the dashboard. In some cases, and in response to the second user input, those service cases that are determined to have an impact on the one or more related KPIs associated with the next lower hierarchical level of the plurality of hierarchical levels and that satisfy the at least one selected filtering criteria may be displayed at the next lower hierarchical level of the plurality of hierarchical levels of the dashboard.

The at least one selected filtering criteria may include a service case status where only those service cases that have the identified service case status satisfy the selected filtering criteria. The at least one selected filtering criteria may include a selected building component type where only those service cases that relate to the selected building component type satisfy the selected filtering criteria. The at least one selected filtering criteria may include a selected time range where only those service cases that are active within the selected time range satisfy the selected filtering criteria.

In some instances, a determination may be made as to whether one or more of the service cases that are determined to have an impact on the one or more related KPIs associated with the next lower hierarchical level of the plurality of hierarchical levels relate to a root cause of the determined impact. When one or more of the one or more service cases displayed at the next lower hierarchical level of the plurality of hierarchal levels relate to a root case of the identified impact, the root cause may be displayed on the dashboard.

In some instances, a determination may be made as to whether one or more of the service cases that are determined to have an impact on the at least one KPI that is associated with the particular hierarchical level of the plurality of hierarchical levels relate to a root cause of the determined impact on the at least one KPI that is associated with the particular hierarchical level of the plurality of hierarchical levels. When one or more of the one or more service cases displayed at the particular hierarchical level of the plurality of hierarchical levels relate to a root case of the identified impact on the at least one KPI that is associated with the particular hierarchical level of the plurality of hierarchical levels, the root cause may be displayed on the dashboard.

One or more of the KPIs associated with the next lower hierarchical level of the plurality of hierarchical levels may represent a measure of performance of a zone of the building, which affects at least one KPI associated with the particular hierarchical level of the plurality of hierarchical levels. One or more of the KPIs associated with the next lower hierarchical level of the plurality of hierarchical levels may represent a measure of performance of a building system component, which affects at least one KPI associated with the particular hierarchical level of the plurality of hierarchical levels. One or more of the KPIs associated with the next lower hierarchical level of the plurality of hierarchical levels may represent a measure of performance of a building system component, and at least one KPI associated with the particular hierarchical level of the plurality of hierarchical levels may represent a measure of performance of a zone that is serviced by the building system component.

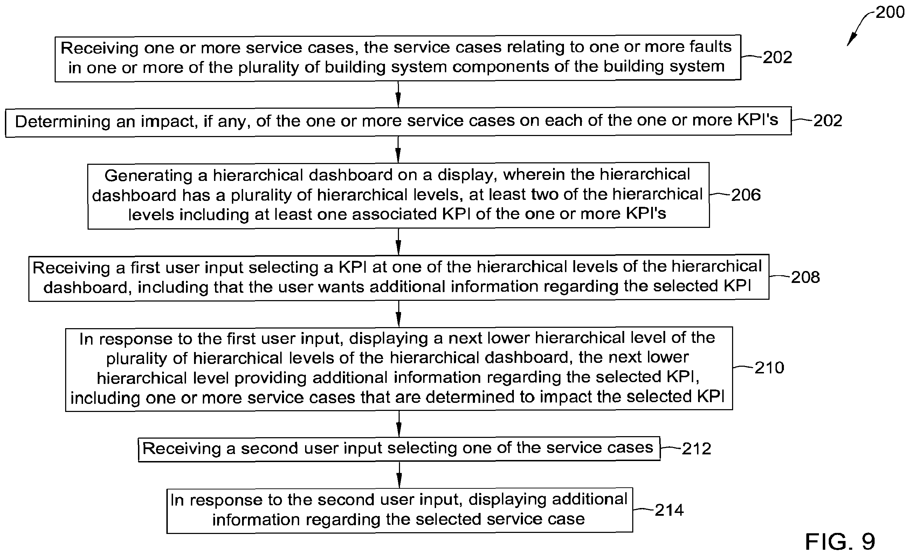

Figure 9 is a flow diagram showing an illustrative method 200 for monitoring performance of a building system (such as the building system 12) based on one or more Key Performance Indicators (KPIs), each of the one or more KPIs representing a corresponding measure of building performance. The building system includes a plurality of building system components (such as the building system components 16) that are responsible for maintaining building performance. One or more service cases are received, the service cases relating to one or more faults in one or more of the plurality of building system components of the building system, as indicated at block 202. An impact, if any, of the one or more service cases on each of the one or more KPIs is determined, as indicated at block 204. A hierarchical dashboard is generated on a display, wherein the hierarchical dashboard has a plurality of hierarchical levels, at least two of the hierarchical levels including at least one associated KPI of the one or more KPIs, as indicated at block 206.

A first user input selecting a KPI at one of the hierarchical levels of the hierarchical dashboard is received, indicating that the user wants additional information regarding the selected KPI, as indicated at block 208. In response, and as indicated at block 210, a next lower hierarchical level of the plurality of hierarchical levels of the hierarchical dashboard is displayed, the next lower hierarchical level providing additional information regarding the selected KPI, including one or more service cases that are determined to impact the selected KPI. A second user input selecting one of the service cases is received, as indicated at block 212. In response, and as indicated at block 214, additional information regarding the selected service case may be displayed.

In some cases, an additional user input may be received that selects at least one of a plurality of filtering criteria. The one or more service cases may be filtered based on the at least one selected filtering criteria of the plurality of filtering criteria. In response to the additional user input, only those service cases satisfying the at least one selected filtering criteria are displayed. The plurality of filtering criteria may include a selected time range, a service case status and a building component type. When the selected filter criteria of the plurality of filter criteria includes the selected time range, only those service cases that are active within the selected time range are displayed on the hierarchical dashboard.

In some instances, a determination may be made as to whether one or more of the service cases that are determined to have an impact on the selected KPI relate to a root cause of the determined impact. When one or more of the one or more service cases relate to a root case of the identified impact, the root cause may be displayed on the hierarchical dashboard. The additional information provided by the next lower hierarchical level of the plurality of hierarchical levels may include a plurality of selectable sub-KPI's that are related to the selected KPI. Additional user input selecting a particular sub-KPI may be received, and in response, an additional dashboard level may be displayed that provides additional information regarding the selected sub-KPI including one or more service cases that are identified as having an impact on the selected sub-KPI.

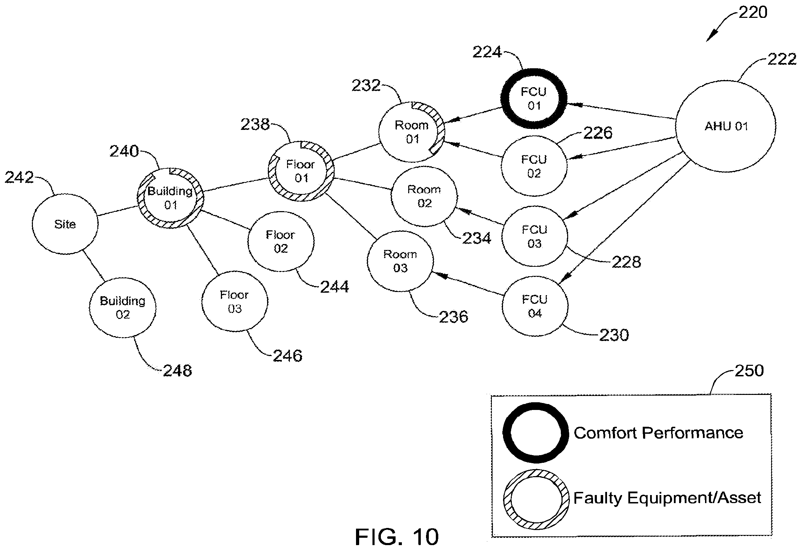

Figure 10 is a schematic illustration of a logical representation 220 of a portion of a building system (such as the building system 12). The logical representation 220 includes an Air Handling Unit 222. A Fan Coil Unit One 224, a Fan Coil Unit Two 226, a Fan Coil Unit Three 228 and a Fan Coil Unit Four 230 are each related to the Air Handling Unit 222, as indicated by the logical representation 220. The Fan Coil Unit One 224 and the Fan Coil Unit Two 226 are both associated with a Room One 232. The Fan Coil Unit Three 228 is associated with a Room Two 234 while the Fan Coil Unit Four 230 is associated with a Room Three 236. Each of the Room One 232, the Room Two 234 and the Room Three 236 are associated with (part of) a Floor One 238. The Floor One 238 is associated with (part of) a Building One 240. The Building One 240 is associated with (part of) a Site One 242. As illustrated, the Building One 240 also includes a Floor Two 244 and a Floor Three 246. The Site One 242 includes a Building Two 248.

By looking at legend 250, it can be seen that the Fan Coil Unit One 224 is in fault. Because the Fan Coil Unit One 224 provides conditioned air to the Room One 232, the Room One 232 can be seen as indicated to have a comfort issue (performance issue). Because Room One 232 is part of Floor One 238, the Floor One 238 correspondingly has a comfort issue. Because Floor One 238 is part of the Building One 240, the Building One 240 correspondingly has a comfort issue. It will be appreciated that because the Room One 232 is only part of the Floor One 238, the Floor One 238 will have a lesser comfort issue than the Room One 232. Because the Floor One 238 is only part of the Building One 240, the Building One 240 will have a lesser comfort issue than the Floor One 238. In this particular example, the equipment fault is that the fan associated with the Fan Coil Unit One 224 won't run. The root cause, as an example, is that the command line from the Fan Coil Unit controller to the fan has been interrupted. Another example root cause would be the Fan Coil Unit One 224 has a dead fan motor.

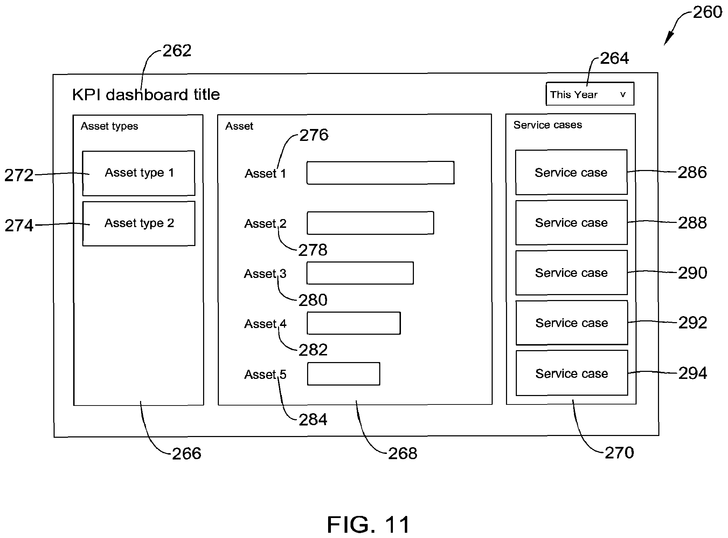

Figures 11 through 16 provide illustrative examples of dashboards that help to illustrate features of the disclosure. While Figures 11 through 16 illustrate a generic KPI, it will be appreciated that other KPIs such as a Comfort KPI, and Energy KPI, and others, may be displayed in a similar fashion in one or more dashboards. Likewise, it will be appreciated that Figures 11 through 16 may represent any suitable performance monitoring application, such as a performance monitor of an industrial process (e.g. refinery, manufacturing process, etc.) that has KPI's representing measures of industrial process performance.

Figure 11 shows an illustrative KPI dashboard 260. The KPI dashboard 260 includes a title 262 and a pull-down menu 264 by which a user can select a particular time frame (e.g. filter by time). The title 262 may vary, depending on the particular KPI that is being displayed in the KPI dashboard 260. In some cases, instead of a pull-down menu 264, the dashboard 260 may instead include a space in which the user can type in the particular time frame they are interested in. In the example given, the pull-down menu 264 indicates "this year" as the time frame. The KPI dashboard 260 includes a first panel 266 that lists asset types, a second panel 268 that lists specific assets and a third panel 270 that lists specific service cases. The first panel 266 lists an Asset Type One 272 and an Asset Type Two 274. As neither the Asset Type One 272 nor the Asset Type Two 274 have been selected, the second panel 268 lists a number of assets that are categorized as being in either of Asset Type One 272 or Asset Type Two 274. The second panel 268 includes an Asset One 276, an Asset Two 278, an Asset Three 280, an Asset Four 282 and an Asset Five 284. Because none of the Asset One 276, the Asset Two 278, the Asset Three 280, the Asset Four 282 and the Asset Five 284 are selected in the second panel 268, the third panel 270 lists a number of service cases that relate to any of the listed Assets 276, 278, 280, 282, 284. As shown, the third panel 270 includes a Service Case 286, a Service Case 288, a Service Case 290, a Service Case 292 and a Service Case 294. If there are additional Service Cases corresponding to the displayed time period, the third panel 270 may include a scrolling icon that may be used to scroll up or down within the list of displayed Service Cases.

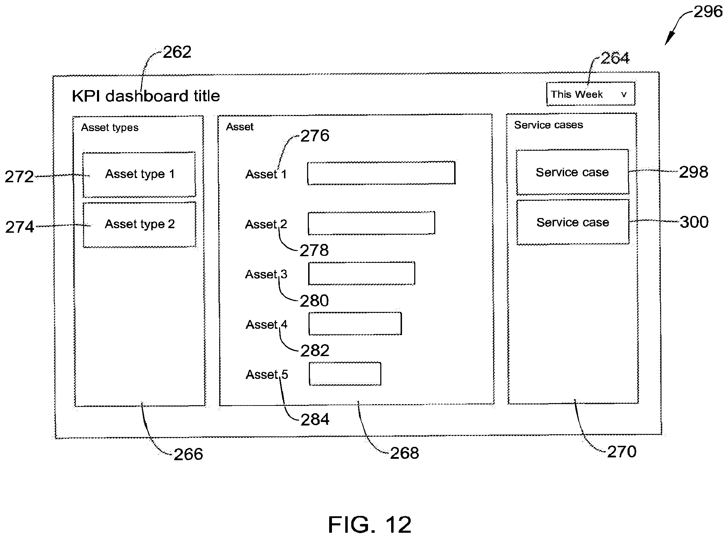

Figure 12 shows an illustrative KPI dashboard 296 that is similar to the KPI dashboard 260, but shows an example in which a user has utilized the pull-down menu 264 to filter the service cases by time by selecting "this week". The first panel 266 and the second panel 268 are the same as that shown in Figure 11, but it can be seen that the third panel 270 has changed. Instead of the five service cases shown in Figure 11, there is now only a Service Case 298 and a Service Case 300. It will be appreciated that the Service Case 298 and the Service Case 300 represent two of the Service Cases 286, 288, 290, 292 and 294 shown in Figure 11.

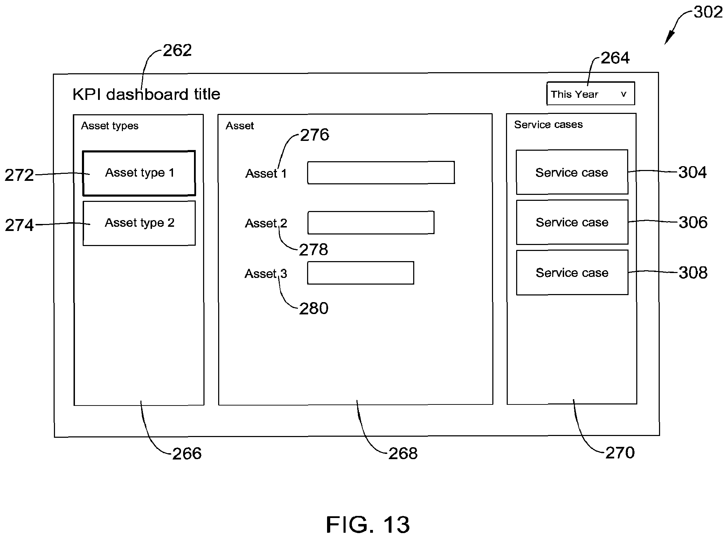

Figure 13 shows an illustrative KPI dashboard 302 that is similar to the KPI dashboard 260, but shows an example in which the user has selected the Asset Type One 272 and has used the pull-down menu 264 to select a time period "this year". In the first panel 266, it can be seen that the Asset Type One 272 has been highlighted. Highlighting the selected Asset Type may include a bold perimeter around the Asset Type, as shown. Highlighting the selected Asset Type may include displaying the selected Asset Type in bold, or underlined, or in a different color, for example. Looking at the second panel 268, the Asset One 276, the Asset Two 278 and the Asset Three 280 belong to the Asset Type One 272 while the Asset Four 282 and the Asset Five 284 belong to the not-selected Asset Type Two 274, as they are not shown. The third panel 270 includes a Service Case 304, a Service Case 306 and a Service Case 308, which each represent one of the Service Case 286, a Service Case 288, a Service Case 290, a Service Case 292 and a Service Case 294 shown in Figure 11. The displayed Service Cases pertain to assets that belong to the Asset Type One 272, while the non-displayed Service Cases pertain to assets that belong to the Asset Type Two 274 in this example.

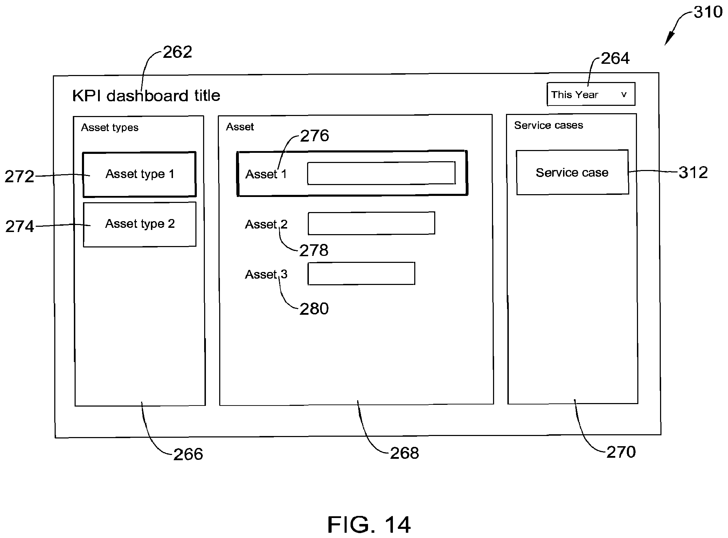

Figure 14 shows an illustrative KPI dashboard 310 that is similar to the KPI dashboard 302, but shows an example in which the user has selected the Asset One 276 in the second panel 268. The Asset One 276 can be seen as being highlighted. Highlighting the selected Asset may include a bold perimeter around the Asset, as shown. Highlighting the selected Asset may include displaying the selected Asset in bold, or underlined, or in a different color, for example. The Asset Type One 272 is still highlighted, so the second panel 268 still includes the Asset One 276, the Asset Two 278 and the Asset Three 280. Because the Asset One 276 has been highlighted, the third panel 270 only includes a single Service Case 312 that corresponds to the selected Asset One 276. The Service Case 312 corresponds to one of the three Service Cases 304, 306 and 308 shown in Figure 13, while the other Service Cases not shown in Figure 14 correspond to a non-selected Asset Type.

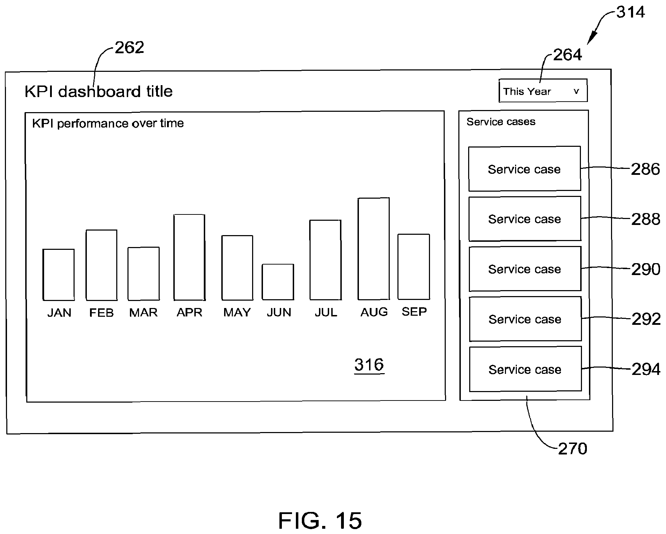

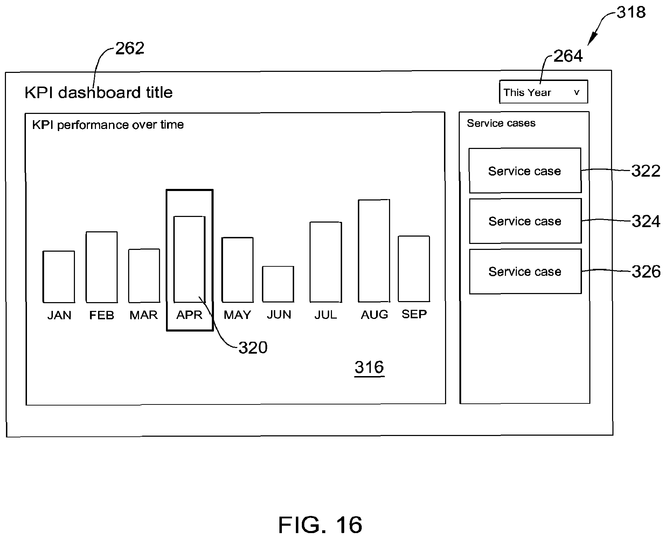

Figure 15 shows an illustrative KPI dashboard 314 that provides an alternative way to display some of the information shown in the KPI dashboard 260. The KPI dashboard 314 includes a graphical panel 316 that illustrates a KPI value in each month from January through September, as the user has selected the time period "this year" using the pull-down menu 264. The current time must therefore be before the close of October. If the user selects a shorter period of time, the graphical panel 316 may provide a bar graph divided into smaller units of time. Instead of months, the graphical panel 316 may show the KPI value or each week, or even for each day, depending on the selected period of time. In Figure 16, an illustrative KPI dashboard 318 shows that a particular time period 320, labeled as "April" has been selected by the user. It can be seen in the third panel 270 that a total of three Service Cases 322, 324 and 326 are shown, out of the five Service Cases 286, 288, 290, 292 and 294 shown in Figure 11, for all Asset Types and for the year. Thus, in this example, the three Service Cases 322, 324 and 326 arose and/or remained open in April.

As can be seen, the dashboard disclosed herein provides an intuitive way for operators to quickly identify service cases that are impacting the performance of the building system. In one example, an operator can select a KPI that is under-performing. In response, the system may automatically display those service cases that negatively impact the selected KPI. The system may also display a number of sub-KPI's that affect the selected KPI. The sub-KPI's may be sorted by performance. The operator may then select a sub-KPI that is underperforming. In response, the system may display KPIs for building components that are responsible for maintaining the performance of the selected sub-KPI. The system may also automatically display service cases that relate to the building components that are responsible for maintaining the performance of the selected sub-KPI. The building components that are responsible for maintaining the performance of the selected sub-KPI may be sorted by performance. The operator may then select a building component that is underperforming. The system may then display service cases that relate to the selected building component. This provides the operator with an intuitive and easy way to drill down from a top level KPI to identify components and service cases that are causing the top level KPI to underperform.

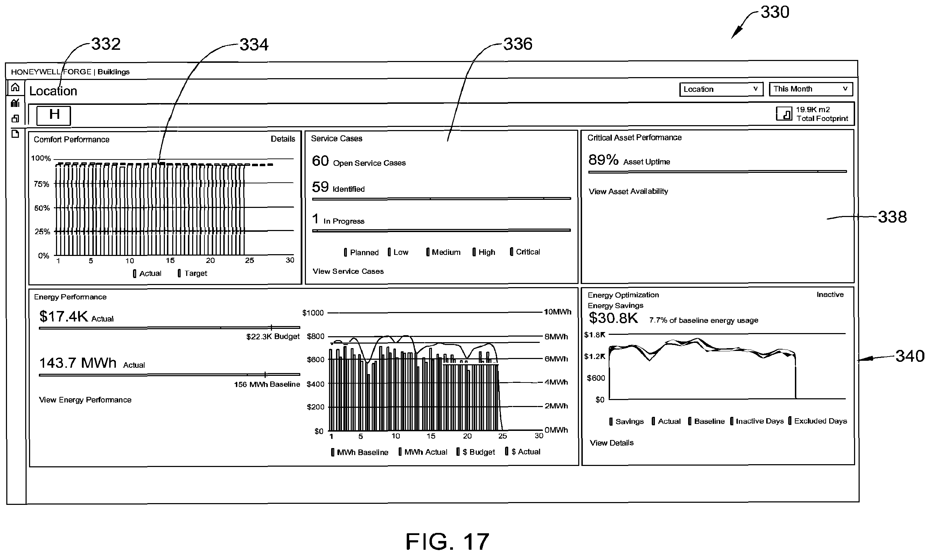

Figures 17 through 22 provide illustrative examples of dashboards that help to illustrate features of the disclosure. In Figure 17, an illustrative dashboard 330 includes a dashboard title 332, which in this case generically reads "Location". The dashboard 330 may be considered as being a top level dashboard given the dashboard title 332, as the dashboard title 332 lists a location, rather than a particular KPI. As will be shown, various next level down dashboards may be accessed by making selections within the top level dashboard, or a next level up dashboard. This may be down for any KPI, although the examples given illustrate the Comfort Performance KPI and the Assets Availability KPI.

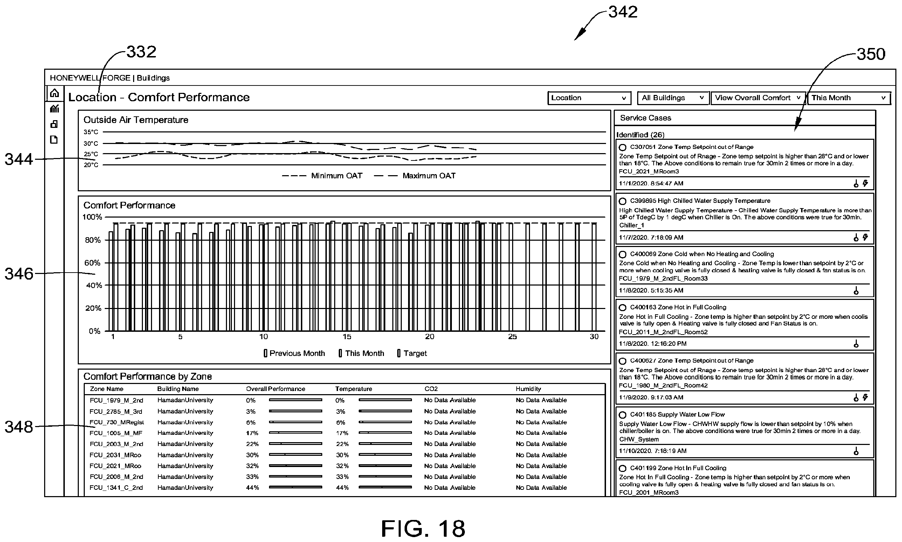

A Comfort panel 334 provides comfort performance KPI data. A Service Cases panel 336 provides information pertaining to number of Service Cases. A Critical Asset Performance panel 338 provides information on critical assets. Across the bottom of the dashboard 330 is a series 340 of energy-related graphs and other energy-related information. If a user selects the Comfort panel 334, a dashboard 342 is provided as shown in Figure 18.

Figure 18 shows the dashboard 342, which may be considered as being a next level down dashboard. The dashboard title 332 still includes the location, but also indicates "Comfort Performance". The dashboard 342 includes an Outside Air Temperature graph 344 and a Comfort performance graph 346 that is the same as that shown in the Comfort panel 334 of Figure 17. A panel 348 provides information regarding the comfort performance broken out into specific zones. A Service Cases panel 350 provides a list of Service Cases that are relevant to comfort performance for a particular selected period of time. Service Cases that are not relevant to the comfort performance for the particular selected period of time are not displayed.

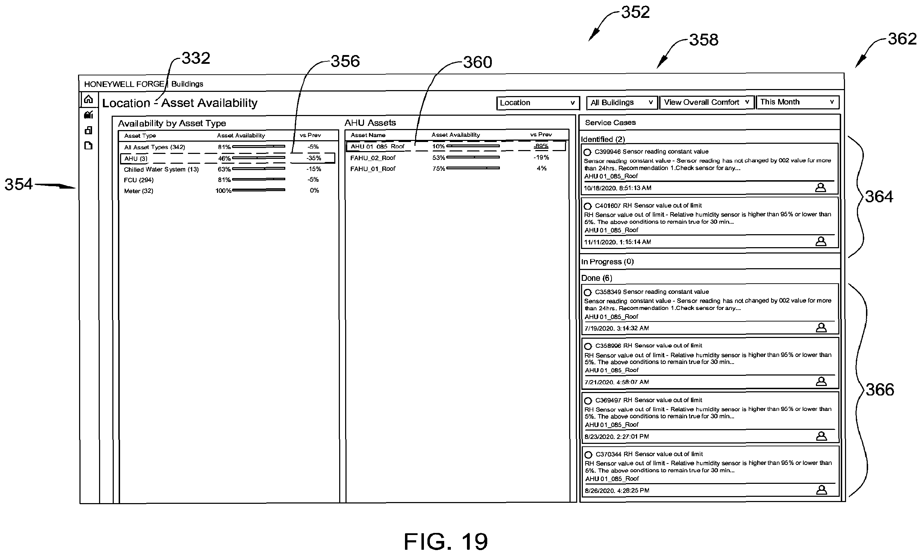

Figure 19 shows an illustrative dashboard 352 that may be displayed if a user drills down on asset availability. The dashboard title 332 still indicates the location, but now also indicates "Asset Availability". A first panel 354 includes a list of availability by asset type. As shown, an AHU (Air Handling Unit) asset type 356 has been selected. Accordingly, a second panel 358 provides a list of AHUs and their availability. A particular AHU 360 has been selected, so the dashboard 352 includes a third panel 362 of relevant Service Cases, divided into a first section 364 of Service Cases that have been identified and a second section 366 of Service Cases that are in progress. In some cases, the third panel 362 may also include a third section (not shown) of completed Service Cases.

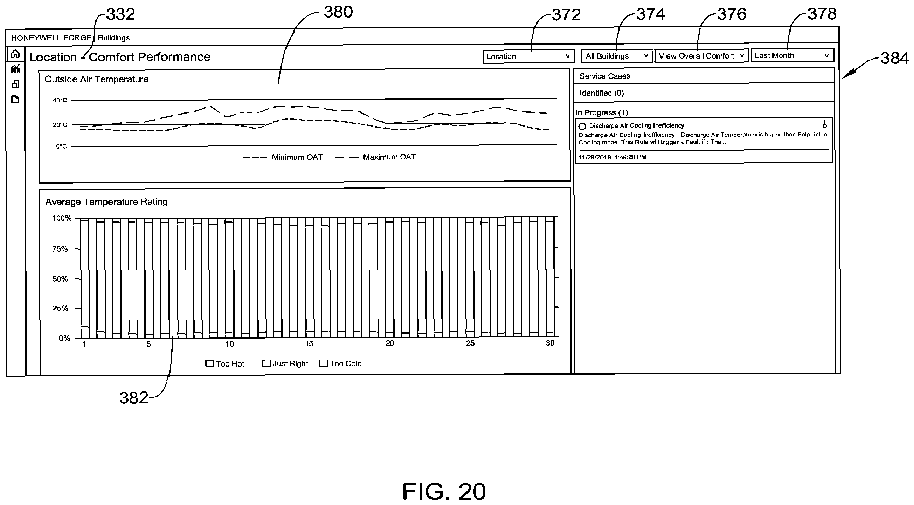

Figure 20 provides an illustrative dashboard 370 that provides an example of a next level down dashboard, as evidenced by the dashboard title 332 indicating both location as well as "comfort performance". Across the top of the dashboard 370, there is a location pull-down menu 372, a buildings pull-down menu 374 that currently reads "all buildings", a KPI pull-down menu 376 that currently reads "view overall comfort" and a time period pull-down menu 378 that currently reads "last month". The dashboard 370 includes an Outside Air Temperature panel 380 that includes both minimum outside air temperature and maximum outside air temperature for the past month. The dashboard 370 includes an Average Temperature Rating panel 382 that shows for each day, how many indications were received that the temperature was "too hot", "too cold" or "just right". As can be seen, the number of complaints that it was either too hot or too cold were relatively low for the displayed month. The dashboard 370 includes a Service Cases panel 384. As shown, there is one Service Case in progress pertaining to discharge air cooling inefficiency.

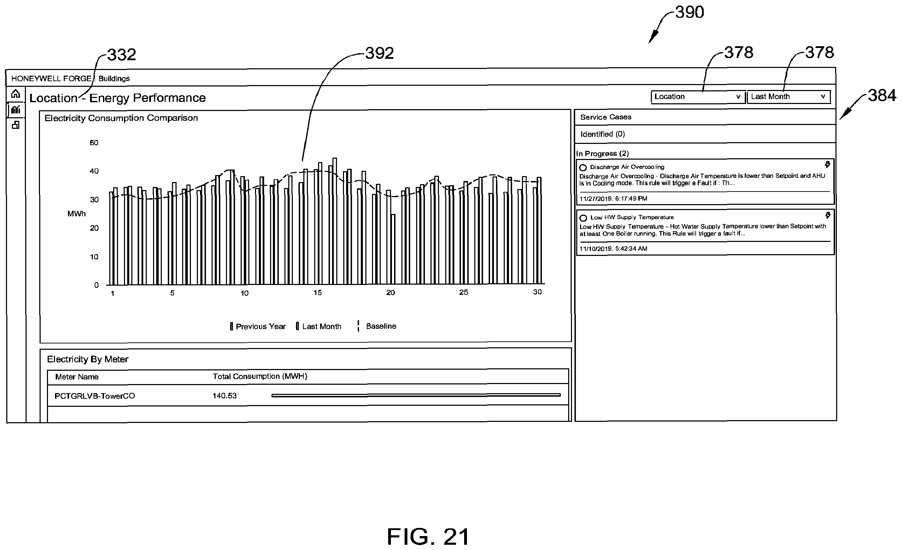

Figure 21 provides an illustrative dashboard 390 that provides an example of a next level down dashboard, as evidenced by the dashboard title 332 indicating both location as well as "energy performance". The dashboard 390 includes an energy consumption comparison panel 392 that shows, for the selected time period of "last month", a comparison between the selected time period for this year as well as for the previous year. The energy consumption comparison panel 392 also includes a line indicating a baseline energy consumption. Some days the actual consumption exceeds the baseline while on other days the actual consumption is below the baseline. The Service Cases panel 384 shows Service Cases pertaining to energy efficiency. As shown, there are two Service Cases in progress, one pertaining to discharge air overcooling and the other pertaining to low hot water supply temperature.

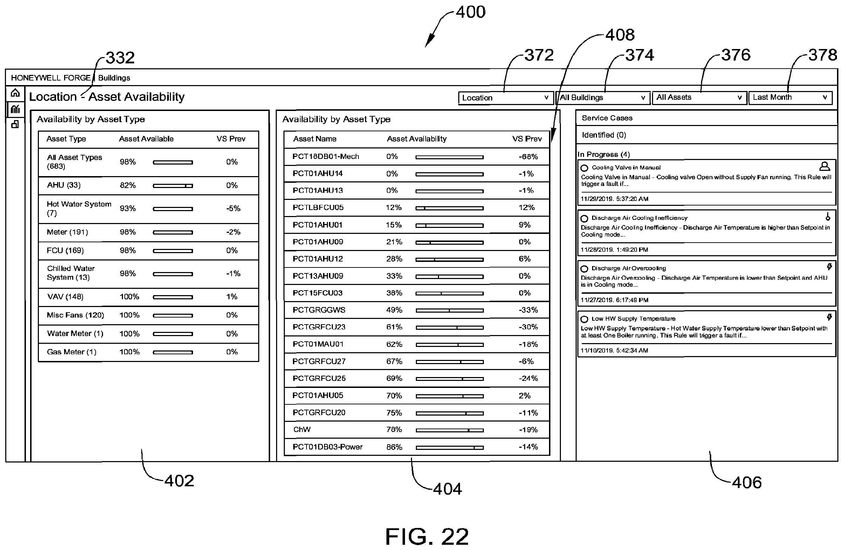

Figure 22 provides an illustrative dashboard 400 that provides an example of a next level down dashboard, as evidenced by the dashboard title 332 indicating both location as well as "asset availability". Across the top of the dashboard 400, there is a location pull-down menu 372, a buildings pull-down menu 374 that currently reads "all buildings", a KPI pull-down menu 376 that currently reads "view overall comfort" and a time period pull-down menu 378 that currently reads "last month". The dashboard 400 includes a first panel 402 that shows availability by asset type, a second panel 404 that shows all assets listed out and a third panel 406 listing relevant Service Cases. If an asset type is selected in the first panel 402, then the second panel 404 will only list assets that fall within that asset type. If no asset type is selected in the first panel 402, then the second panel 404 will list all assets. A scrolling button 408 may allow a user to scroll up and down if there are too many assets to display simultaneously. The third panel 406 will list any Service Cases pertinent to the selected asset type and/or the selected asset, if any.

## Claims

1. A method for monitoring performance of a building system of a building based on one or more Key Performance Indicators (KPIs), each of the one or more KPIs representing a corresponding measure of building performance, the building system including a plurality of building system components that are responsible for maintaining building performance, the method comprising:
generating a dashboard on a display, wherein the dashboard has a plurality of selectable hierarchical levels, each of the hierarchical levels including at least one associated KPI of the one or more KPIs, the at least one KPI that is associated with a particular hierarchical level in the plurality of hierarchical levels comprising an aggregation of one or more related KPIs associated with a next lower hierarchical level of the plurality of hierarchical levels;
receiving one or more service cases, the service cases relating to one or more faults in one or more of the plurality of building system components of the building system;
determining an impact, if any, of the one or more service cases on each of the one or more KPIs, wherein the service cases that are determined to have an impact on the at least one KPI that is associated with the particular hierarchical level of the plurality of hierarchical levels comprises an aggregation of one or more service cases determined to have an impact on the one or more related KPIs associated with the next lower hierarchical level of the plurality of hierarchical levels;
receiving a first user input selecting the particular hierarchical level of the plurality of hierarchical levels of the dashboard;
in response to the received first input, displaying at the particular hierarchical level of the plurality of hierarchical levels of the dashboard:
the at least one KPI associated with the particular hierarchical level of the plurality of hierarchical levels of the dashboard;
the one or more service cases that are determined to have an impact on the at least one KPI associated with the particular hierarchical level;
receiving a second user input selecting the next lower hierarchical level of the plurality of hierarchical levels of the dashboard;
in response to the received second input, displaying at the next lower hierarchical level of the plurality of hierarchical levels of the dashboard:
the one or more related KPIs associate with the next lower hierarchical level of the plurality of hierarchical levels; and
the one or more service cases that are determined to have an impact on the one or more related KPIs associated with the next lower hierarchical level of the plurality of hierarchical levels.

2. The method of claim 1, further comprising:
receiving a third user input selecting at least one of a plurality of filtering criteria;
filtering the one or more service cases based on the at least one selected filtering criteria of the plurality of filtering criteria; and
in response to the first user input, displaying at the particular hierarchical level of the plurality of hierarchical levels of the dashboard those service cases that are determined to have an impact on the at least one KPI associated with the particular hierarchical level and that satisfy the at least one selected filtering criteria.

3. The method of any one of claims 1 or 2, further comprising:
receiving a third user input selecting at least one of a plurality of filtering criteria;
filtering the one or more service cases based on the at least one selected filtering criteria of the plurality of filtering criteria; and
in response to the second user input, displaying at the next lower hierarchical level of the plurality of hierarchical levels of the dashboard those service cases that are determined to have an impact on the one or more related KPIs associated with the next lower hierarchical level of the plurality of hierarchical levels and that satisfy the at least one selected filtering criteria.

4. The method of any one of claims 1 to 3, further comprising:
determining whether one or more of the service cases that are determined to have an impact on the one or more related KPIs associated with the next lower hierarchical level of the plurality of hierarchical levels relate to a root cause of the determined impact; and
when one or more of the one or more service cases displayed at the next lower hierarchical level of the plurality of hierarchal levels relate to a root case of the identified impact, displaying the root cause on the dashboard.

5. The method of any one of claims 1 to 4, further comprising:
determining whether one or more of the service cases that are determined to have an impact on the at least one KPI that is associated with the particular hierarchical level of the plurality of hierarchical levels relate to a root cause of the determined impact on the at least one KPI that is associated with the particular hierarchical level of the plurality of hierarchical levels; and
when one or more of the one or more service cases displayed at the particular hierarchical level of the plurality of hierarchical levels relate to a root cause of the identified impact on the at least one KPI that is associated with the particular hierarchical level of the plurality of hierarchical levels, displaying the root cause on the dashboard.

6. The method of any one of claims 1 to 5, wherein one or more of the KPIs associated with the next lower hierarchical level of the plurality of hierarchical levels represent a measure of performance of a zone of the building, which affects at least one KPI associated with the particular hierarchical level of the plurality of hierarchical levels.

7. The method of any one of claims 1 to 5, wherein one or more of the KPIs associated with the next lower hierarchical level of the plurality of hierarchical levels represent a measure of performance of a building system component, which affects at least one KPI associated with the particular hierarchical level of the plurality of hierarchical levels.

8. The method of any one of claims 1 to 5, wherein one or more of the KPIs associated with the next lower hierarchical level of the plurality of hierarchical levels represent a measure of performance of a building system component, and at least one KPI associated with the particular hierarchical level of the plurality of hierarchical levels represents a measure of performance of a zone that is serviced by the building system component.

9. A system for use in monitoring performance of a building system of a building based on one or more Key Performance Indicators (KPIs), each of the one or more KPIs representing a corresponding measure of building performance, the building system including a plurality of building system components that are responsible for maintaining building performance, the system comprising:
a receiver for receiving operational data from the building system;
a user input device;
a display; and
a processor operatively coupled to the receiver, the user input device and the display, the processor is configured to:
generate a dashboard on a display, wherein the dashboard has a plurality of selectable hierarchical levels, each of the hierarchical levels including at least one associated KPI of the one or more KPIs, the at least one KPI that is associated with a particular hierarchical level in the plurality of hierarchical levels comprising an aggregation of one or more related KPIs associated with a next lower hierarchical level of the plurality of hierarchical levels;
receive one or more service cases, the service cases relating to one or more faults in one or more of the plurality of building system components of the building system;
determine an impact, if any, of the one or more service cases on each of the one or more KPIs, wherein the service cases that are determined to have an impact on the at least one KPI that is associated with the particular hierarchical level of the plurality of hierarchical levels comprises an aggregation of one or more service cases determined to have an impact on the one or more related KPIs associated with the next lower hierarchical level of the plurality of hierarchical levels;
receive a user input, via the user input device, a first user input selecting the particular hierarchical level of the plurality of hierarchical levels of the dashboard;
in response to the received first input, display at the particular hierarchical level of the plurality of hierarchical levels of the dashboard:
the at least one KPI associated with the particular hierarchical level of the plurality of hierarchical levels of the dashboard;
the one or more service cases that are determined to have an impact on the at least one KPI associated with the particular hierarchical level;
receive a second user input, via the user input device, the second user input selecting the next lower hierarchical level of the plurality of hierarchical levels of the dashboard;
in response to the received second input, display at the next lower hierarchical level of the plurality of hierarchical levels of the dashboard:
the one or more related KPIs associate with the next lower hierarchical level of the plurality of hierarchical levels;
the one or more service cases that are determined to have an impact on the one or more related KPIs associated with the next lower hierarchical level of the plurality of hierarchical levels.

10. The system of claim 9, further comprising:
receiving a third user input selecting at least one of a plurality of filtering criteria;
filtering the one or more service cases based on the at least on selected filtering criteria of the plurality of filtering criteria; and
in response to the first user input, displaying at the particular hierarchical level of the plurality of hierarchical levels of the dashboard those service cases that are determined to have an impact on the at least one KPI associated with the particular hierarchical level and that satisfy the at least one selected filtering criteria.

11. The system of any one of claims 9 or 10, wherein the processor is further configured to detect one or more faults via the operational data received from the building system, and to generate one or more service cases to correct the detected one or more faults.

12. The method of claim 1, further comprising:
receiving a further user input selecting a KPI at one of the hierarchical levels of the dashboard, indicating that the user wants additional information regarding the selected KPI;
in response to the further user input, displaying the next lower hierarchical level of the plurality of hierarchical levels of the dashboard, the next lower hierarchical level providing additional information regarding the selected KPI, including one or more service cases that are determined to impact the selected KPI;
receiving a second further user input selecting one of the service cases; and
in response to the second user input, displaying additional information regarding the selected service case.

13. The method of claim 12, wherein the additional information provided by the next lower hierarchical level of the plurality of hierarchical levels includes a plurality of selectable sub-KPI's that are related to the selected KPI;
receiving additional user input selecting a particular sub-KPI, and in response, displaying an additional dashboard level that provides additional information regarding the selected sub-KPI including one or more service cases that are identified as having an impact on the selected sub-KPI.

14. The system of claim 9, wherein the processor is further configured to:
receive a further user input selecting a KPI at one of the hierarchical levels of the dashboard, indicating that the user wants additional information regarding the selected KPI;
in response to the further user input, display the next lower hierarchical level of the plurality of hierarchical levels of the dashboard, the next lower hierarchical level providing additional information regarding the selected KPI, including one or more service cases that are determined to impact the selected KPI;
receive a second further user input selecting one of the service cases; and
in response to the second user input, display additional information regarding the selected service case.

15. The system of claim 14, wherein the additional information provided by the next lower hierarchical level of the plurality of hierarchical levels includes a plurality of selectable sub-KPI's that are related to the selected KPI;
receive additional user input selecting a particular sub-KPI, and in response, display an additional dashboard level that provides additional information regarding the selected sub-KPI including one or more service cases that are identified as having an impact on the selected sub-KPI.

## Patentansprüche

1. Verfahren zum Überwachen der Leistung eines Gebäudesystems eines Gebäudes auf Basis einer oder mehrerer Leistungskennzahlen (KPIs), wobei jede der einen oder mehreren KPIs ein entsprechendes Maß einer Gebäudeleistung darstellt, wobei das Gebäudesystem eine Vielzahl von Gebäudesystemkomponenten umfasst, die für das Aufrechterhalten der Gebäudeleistung verantwortlich sind, wobei das Verfahren **dadurch gekennzeichnet ist, dass** es Folgendes umfasst:
Erzeugen eines Dashboards auf einer Anzeige, wobei das Dashboard eine Vielzahl von auswählbaren Hierarchieebenen aufweist, wobei jede der Hierarchieebenen mindestens eine zugehörige KPI der einen oder mehreren KPIs beinhaltet, wobei die mindestens eine KPI, die einer bestimmten Hierarchieebene in der Vielzahl von Hierarchieebenen zugehörig ist, eine Zusammenfassung einer oder mehrerer verbundener KPIs, die einer nächstniedrigeren Hierarchieebene der Vielzahl von Hierarchieebenen zugehörig sind, umfasst;
Empfangen eines oder mehrerer Wartungsfälle, wobei die Wartungsfälle in Verbindung mit einem oder mehreren Fehlern in einer oder mehreren der Vielzahl von Gebäudesystemkomponenten des Gebäudesystems stehen;
Ermitteln einer Auswirkung, sofern vorhanden, des einen oder der mehreren Wartungsfälle auf jede der einen oder mehreren KPIs, wobei die Wartungsfälle, für die eine Auswirkung auf die mindestens eine KPI, die der bestimmten Hierarchieebene der Vielzahl von Hierarchieebenen zugehörig ist, ermittelt wurde, eine Zusammenfassung eines oder mehrerer Wartungsfälle umfassen, für die eine Auswirkung auf die eine oder mehreren verbundenen KPIs, die einer nächstniedrigeren Hierarchieebene der Vielzahl von Hierarchieebenen zugehörig sind, umfasst;
Empfangen einer ersten Benutzereingabe, welche die bestimmte Hierarchieebene der Vielzahl von Hierarchieebenen des Dashboards auswählt;
als Reaktion auf die empfangene erste Eingabe, Anzeigen in der bestimmten Hierarchieebene der Vielzahl von Hierarchieebenen des Dashboards:
der mindestens einen KPI, die der bestimmten Hierarchieebene der Vielzahl von Hierarchieebenen des Dashboards zugehörig ist;
des einen oder der mehreren Wartungsfälle, für die ermittelt wird, dass sie eine Auswirkung auf die mindestens eine KPI, die der bestimmten Hierarchieebene zugehörig ist, haben;
Empfangen einer zweiten Benutzereingabe, welche die nächstniedrigere Hierarchieebene der Vielzahl von Hierarchieebenen des Dashboards auswählt;
als Reaktion auf die empfangene zweite Eingabe, Anzeigen in der nächstniedrigeren Hierarchieebene der Vielzahl von Hierarchieebenen des Dashboards:
der einen oder mehreren verbundenen KPIs, die der nächstniedrigeren Hierarchieebene der Vielzahl von Hierarchieebenen zugehörig sind; und
des einen oder der mehreren Wartungsfälle, für die ermittelt wird, dass sie eine Auswirkung auf die eine oder mehreren verbundenen KPIs haben, die der nächstniedrigeren Hierarchieebene der Vielzahl von Hierarchieebenen zugehörig sind.

2. Verfahren nach Anspruch 1, ferner umfassend:
Empfangen einer dritten Benutzereingabe, die mindestens eines einer Vielzahl von Filterkriterien auswählt;
Filtern des einen oder der mehreren Wartungsfälle auf Basis des mindestens einen ausgewählten Filterkriteriums der Vielzahl von Filterkriterien; und
als Reaktion auf die erste Benutzereingabe, Anzeigen in der bestimmten Hierarchieebene der Vielzahl von Hierarchieebenen des Dashboards derjenigen Wartungsfälle, für die ermittelt wird, dass sie eine Auswirkung auf die mindestens eine KPI haben, die der bestimmten Hierarchieebene zugehörig ist, und die das mindestens eine ausgewählte Filterkriterium erfüllen.

3. Verfahren nach einem der Ansprüche 1 oder 2, ferner umfassend:
Empfangen einer dritten Benutzereingabe, die mindestens eines einer Vielzahl von Filterkriterien auswählt;
Filtern des einen oder der mehreren Wartungsfälle auf Basis des mindestens einen ausgewählten Filterkriteriums der Vielzahl von Filterkriterien; und
als Reaktion auf die zweite Benutzereingabe, Anzeigen in der nächstniedrigeren Hierarchieebene der Vielzahl von Hierarchieebenen des Dashboards derjenigen Wartungsfälle, für die ermittelt wird, dass sie eine Auswirkung auf die eine oder mehreren verbundenen KPIs, die der nächstniedrigeren Hierarchieebene der Vielzahl von Hierarchieebenen zugehörig sind, haben und die das mindestens eine ausgewählte Filterkriterium erfüllen.

4. Verfahren nach einem der Ansprüche 1 bis 3, ferner umfassend:
Ermitteln, ob einer oder mehrere der Wartungsfälle, für die ermittelt wird, dass sie eine Auswirkung auf die eine oder mehreren verbundenen KPIs, die der nächstniedrigeren Hierarchieebene der Vielzahl von Hierarchieebenen zugehörig sind, haben, in Verbindung mit einer Grundursache der ermittelten Auswirkung stehen; und
wenn einer oder mehrere des einen oder der mehreren Wartungsfälle, die in der nächstniedrigeren Hierarchieebene der Vielzahl von Hierarchieebenen angezeigt werden, in Verbindung mit einer Grundursache der identifizierten Auswirkung stehen, Anzeigen der Grundursache auf dem Dashboard.

5. Verfahren nach einem der Ansprüche 1 bis 4, ferner umfassend:
Ermitteln, ob einer oder mehrere der Wartungsfälle, für die ermittelt wird, dass sie eine Auswirkung auf die mindestens eine KPI, die der bestimmten Hierarchieebene der Vielzahl von Hierarchieebenen zugehörig ist, haben, in Verbindung mit einer Grundursache der ermittelten Auswirkung auf die mindestens eine KPI, die der bestimmten Hierarchieebene der Vielzahl von Hierarchieebenen zugehörig ist, stehen; und
wenn einer oder mehrere des einen oder der mehreren Wartungsfälle, die in der bestimmten Hierarchieebene der Vielzahl von Hierarchieebenen angezeigt werden, in Verbindung mit einer Grundursache der identifizierten Auswirkung auf die mindestens eine KPI, die der bestimmten Hierarchieebene der Vielzahl von Hierarchieebenen zugehörig ist, stehen, Anzeigen der Grundursache auf dem Dashboard;

6. Verfahren nach einem der Ansprüche 1 bis 5, wobei eine oder mehrere der KPIs, die der nächstniedrigeren Hierarchieebene der Vielzahl von Hierarchieebenen zugehörig sind, ein Leistungsmaß einer Zone des Gebäudes darstellen, welches mindestens eine KPI, die der bestimmten Hierarchieebene der Vielzahl von Hierarchieebenen zugehörig ist, beeinflusst.

7. Verfahren nach einem der Ansprüche 1 bis 5, wobei eine oder mehrere der KPIs, die der nächstniedrigeren Hierarchieebene der Vielzahl von Hierarchieebenen zugehörig sind, ein Leistungsmaß einer Gebäudesystemkomponente darstellen, welches mindestens eine KPI, die der bestimmten Hierarchieebene der Vielzahl von Hierarchieebenen zugehörig ist, beeinflusst.

8. Verfahren nach einem der Ansprüche 1 bis 5, wobei eine oder mehrere der KPIs, die der nächstniedrigeren Hierarchieebene der Vielzahl von Hierarchieebenen zugehörig sind, ein Leistungsmaß einer Gebäudesystemkomponente darstellen, und mindestens eine KPI, die der bestimmten Hierarchieebene der Vielzahl von Hierarchieebenen zugehörig ist, ein Leistungsmaß einer Zone darstellt, die von der Gebäudesystemkomponente gewartet wird.

9. System zur Verwendung bei der Überwachung der Leistung eines Gebäudesystems eines Gebäudes auf Basis einer oder mehrerer Leistungskennzahlen (KPIs), wobei jede der einen oder mehreren KPIs ein entsprechendes Maß einer Gebäudeleistung darstellt, wobei das Gebäudesystem eine Vielzahl von Gebäudesystemkomponenten umfasst, die für die Aufrechterhaltung der Gebäudeleistung verantwortlich sind, wobei das System **dadurch gekennzeichnet ist, dass** es Folgendes umfasst:
einen Empfänger für das Empfangen von Betriebsdaten von dem Gebäudesystem;
eine Benutzereingabevorrichtung;
eine Anzeige; und
einen Prozessor, der betreibbar mit dem Empfänger, der Benutzereingabevorrichtung und der Anzeige gekoppelt ist, wobei der Prozessor dazu konfiguriert ist:
ein Dashboard auf einer Anzeige zu erzeugen, wobei das Dashboard eine Vielzahl von auswählbaren Hierarchieebenen aufweist, wobei jede der Hierarchieebenen mindestens eine zugehörige KPI der einen oder mehreren KPIs beinhaltet, wobei die mindestens eine KPI, die einer bestimmten Hierarchieebene in der Vielzahl von Hierarchieebenen zugehörig ist, eine Zusammenfassung einer oder mehrerer verbundener KPIs, die einer nächstniedrigeren Hierarchieebene der Vielzahl von Hierarchieebenen zugehörig sind, umfasst;
einen oder mehrere Wartungsfälle zu empfangen, wobei die Wartungsfälle in Verbindung mit einem oder mehreren Fehlern in einer oder mehreren der Vielzahl von Gebäudesystemkomponenten des Gebäudesystems stehen;
eine Auswirkung, sofern vorhanden, des einen oder der mehreren Wartungsfälle auf jede der einen oder mehreren KPIs zu ermitteln, wobei die Wartungsfälle, für die ermittelt wird, dass sie eine Auswirkung auf die mindestens eine KPI, die der bestimmten Hierarchieebene der Vielzahl von Hierarchieebenen zugehörig ist, haben, eine Zusammenfassung einer oder mehrerer Wartungsfälle umfassen, für die eine Auswirkung auf die eine oder mehreren verbundenen KPIs, die einer nächstniedrigeren Hierarchieebene der Vielzahl von Hierarchieebenen zugehörig sind, umfasst;
über eine Benutzereingabevorrichtung eine Benutzereingabe zu empfangen, wobei die erste Benutzereingabe die bestimmte Hierarchieebene der Vielzahl von Hierarchieebenen des Dashboards auswählt;
als Reaktion auf die empfangene erste Eingabe, in der bestimmten Hierarchieebene der Vielzahl von Hierarchieebenen des Dashboards Folgendes anzuzeigen:
die mindestens eine KPI, die der bestimmten Hierarchieebene der Vielzahl von Hierarchieebenen des Dashboards zugehörig ist;
den einen oder die mehreren Wartungsfälle, für die ermittelt wird, dass sie eine Auswirkung auf die mindestens eine KPI haben, die der bestimmten Hierarchieebene zugehörig ist;
über eine Benutzereingabevorrichtung eine zweite Benutzereingabe zu empfangen, wobei die zweite Benutzereingabe die nächstniedrigere Hierarchieebene der Vielzahl von Hierarchieebenen des Dashboards auswählt;
als Reaktion auf die empfangene zweite Eingabe, in der nächstniedrigeren Hierarchieebene der Vielzahl von Hierarchieebenen des Dashboards Folgendes anzuzeigen:
die eine oder mehreren verbundenen KPIs, die der nächstniedrigeren Hierarchieebene der Vielzahl von Hierarchieebenen zugehörig sind; und
den einen oder die mehreren Wartungsfälle, für die ermittelt wird, dass sie eine Auswirkung auf die eine oder mehreren verbundenen KPIs haben, die der nächstniedrigeren Hierarchieebene der Vielzahl von Hierarchieebenen zugehörig sind.

10. System nach Anspruch 9, ferner umfassend:
Empfangen einer dritten Benutzereingabe, die mindestens eines einer Vielzahl von Filterkriterien auswählt;
Filtern des einen oder der mehreren Wartungsfälle auf Basis des mindestens einen ausgewählten Filterkriteriums der Vielzahl von Filterkriterien; und
als Reaktion auf die erste Benutzereingabe, Anzeigen in der bestimmten Hierarchieebene der Vielzahl von Hierarchieebenen des Dashboards derjenigen Wartungsfälle, für die ermittelt wird, dass sie eine Auswirkung auf die mindestens eine KPI haben, die der bestimmten Hierarchieebene zugehörig ist, und die das mindestens eine ausgewählte Filterkriterium erfüllen.

11. System nach einem der Ansprüche 9 oder 10, wobei der Prozessor ferner dazu konfiguriert ist, einen oder mehrere Fehler anhand der von dem Gebäudesystem empfangenen Betriebsdaten aufzudecken, und einen oder mehrere Wartungsfälle zu erzeugen, um den einen oder die mehreren aufgedeckten Fehler zu korrigieren.

12. Verfahren nach Anspruch 1, ferner umfassend:
Empfangen einer weiteren Benutzereingabe, die eine KPI in einer der Hierarchieebenen des Dashboards auswählt, mit der Angabe, dass der Benutzer in Bezug auf die ausgewählte KPI zusätzliche Informationen wünscht;
als Reaktion auf die weitere Benutzereingabe, Anzeigen der nächstniedrigeren Hierarchieebene der Vielzahl von Hierarchieebenen des Dashboards, wobei die nächstniedrigere Hierarchieebene zusätzliche Informationen in Bezug auf die ausgewählte KPI bereitstellt, die einen oder mehrere Wartungsfälle beinhalten, für die eine Auswirkung auf die ausgewählte KPI ermittelt wird;
Empfangen einer zweiten weiteren Benutzereingabe, die einen der Wartungsfälle auswählt; und
als Reaktion auf die zweite Benutzereingabe, Anzeigen zusätzlicher Informationen in Bezug auf den ausgewählten Wartungsfall.

13. Verfahren nach Anspruch 12, wobei die zusätzlichen Informationen, die von der nächstniedrigeren Hierarchieebene der Vielzahl von Hierarchieebenen bereitgestellt werden, eine Vielzahl von auswählbaren Unter-KPIs beinhalten, die mit der ausgewählten KPI verbunden sind.
Empfangen einer zusätzlichen Benutzereingabe, die eine bestimmte Unter-KPI auswählt, und als Reaktion, Anzeigen einer zusätzlichen Dashboard-Ebene, die zusätzliche Informationen in Bezug auf die ausgewählte Unter-KPl bereitstellt, die einen oder mehrere Wartungsfälle beinhalten, für die identifiziert wird, dass sie eine Auswirkung auf die ausgewählte Unter-KPI haben.

14. System nach Anspruch 9, wobei der Prozessor ferner dazu konfiguriert ist:
eine weitere Benutzereingabe zu empfangen, die eine KPI in einer der Hierarchieebenen des Dashboards auswählt, mit der Angabe, dass der Benutzer in Bezug auf die ausgewählte KPI zusätzliche Informationen wünscht;
als Reaktion auf die weitere Benutzereingabe, die nächstniedrigere Hierarchieebene der Vielzahl von Hierarchieebenen des Dashboards anzuzeigen, wobei die nächstniedrigere Hierarchieebene zusätzliche Informationen in Bezug auf die ausgewählte KPI bereitstellt, die einen oder mehrere Wartungsfälle beinhalten, für die eine Auswirkung auf die ausgewählte KPI ermittelt wird;
eine zweite weitere Benutzereingaben zu empfangen, die einen der Wartungsfälle auswählt; und
als Reaktion auf die zweite Benutzereingabe, zusätzliche Informationen in Bezug auf den ausgewählten Wartungsfall anzuzeigen.

15. System nach Anspruch 14, wobei die zusätzlichen Informationen, die von der nächstniedrigeren Hierarchieebene der Vielzahl von Hierarchieebenen bereitgestellt werden, eine Vielzahl von auswählbaren Unter-KPIs beinhalten, die mit der ausgewählten KPI verbunden sind;
eine zusätzliche Benutzereingabe zu empfangen, die eine bestimmte Unter-KPI auswählt, und als Reaktion, eine zusätzliche Dashboard-Ebene anzuzeigen, die zusätzliche Informationen in Bezug auf die ausgewählte Unter-KPl bereitstellt, die einen oder mehrere Wartungsfälle beinhalten, für die identifiziert wird, dass sie eine Auswirkung auf die ausgewählte Unter-KPl haben.

## Revendications

1. Procédé de surveillance de performances d'un système de bâtiment d'un bâtiment basé sur un ou plusieurs indicateurs de performances clés (KPI), chacun des un ou plusieurs KPI représentant une mesure correspondante de performances du bâtiment, le système de bâtiment comprenant une pluralité de composants de système de bâtiment qui sont responsables du maintien des performances du bâtiment, le procédé étant **caractérisé en ce qu'**il comprend :
la génération d'un tableau de bord sur un affichage, dans lequel le tableau de bord a une pluralité de niveaux hiérarchiques sélectionnables, chacun des niveaux hiérarchiques incluant au moins un KPI associé parmi les un ou plusieurs KPI, le au moins un KPI qui est associé à un niveau hiérarchique particulier dans la pluralité de niveaux hiérarchiques comprenant une agrégation d'un ou plusieurs KPI apparentés associés à un niveau hiérarchique inférieur suivant de la pluralité de niveaux hiérarchiques ;
la réception d'un ou plusieurs cas de service, les cas de service se rapportant à une ou plusieurs défaillances dans un ou plusieurs de la pluralité de composants de système de bâtiment du système de bâtiment ;
la détermination d'un impact, le cas échéant, des un ou plusieurs cas de service sur chacun des un ou plusieurs KPI, dans lequel les cas de service qui sont déterminés comme ayant un impact sur le au moins un KPI qui est associé au niveau hiérarchique particulier de la pluralité de niveaux hiérarchiques comprend une agrégation d'un ou plusieurs cas de service déterminés comme ayant un impact sur les un ou plusieurs KPI apparentés associés au niveau hiérarchique inférieur suivant de la pluralité de niveaux hiérarchiques ;
la réception d'une première entrée utilisateur sélectionnant le niveau hiérarchique particulier de la pluralité de niveaux hiérarchiques du tableau de bord ;
en réponse à la première entrée reçue, l'affichage au niveau hiérarchique particulier de la pluralité de niveaux hiérarchiques du tableau de bord :
du au moins un KPI associé au niveau hiérarchique particulier de la pluralité de niveaux hiérarchiques du tableau de bord ;
des un ou plusieurs cas de service qui sont déterminés comme ayant un impact sur le au moins un KPI associé au niveau hiérarchique particulier ;
la réception d'une deuxième entrée utilisateur sélectionnant le niveau hiérarchique inférieur suivant de la pluralité de niveaux hiérarchiques du tableau de bord ;
en réponse à la deuxième entrée reçue, l'affichage au niveau hiérarchique inférieur suivant de la pluralité de niveaux hiérarchiques du tableau de bord :
des un ou plusieurs KPI apparentés associés au niveau hiérarchique inférieur suivant de la pluralité de niveaux hiérarchiques ; et
des un ou plusieurs cas de service qui sont déterminés comme ayant un impact sur les un ou plusieurs KPI apparentés associés au niveau hiérarchique inférieur suivant de la pluralité de niveaux hiérarchiques.

2. Procédé selon la revendication 1, comprenant en outre :
la réception d'une troisième entrée utilisateur sélectionnant au moins un d'une pluralité de critères de filtrage ;
le filtrage des un ou plusieurs cas de service sur la base du au moins un critère de filtrage sélectionné de la pluralité de critères de filtrage ; et
en réponse à la première entrée utilisateur, l'affichage, au niveau hiérarchique particulier de la pluralité de niveaux hiérarchiques du tableau de bord, des cas de service qui sont déterminés comme ayant un impact sur le au moins un KPI associé au niveau hiérarchique particulier et qui satisfont le au moins un critère de filtrage sélectionné.

3. Procédé selon l'une quelconque des revendications 1 ou 2, comprenant en outre :
la réception d'une troisième entrée utilisateur sélectionnant au moins un d'une pluralité de critères de filtrage ;
le filtrage des un ou plusieurs cas de service sur la base du au moins un critère de filtrage sélectionné de la pluralité de critères de filtrage ; et
en réponse à la seconde entrée d'utilisateur, l'affichage, au niveau hiérarchique inférieur suivant de la pluralité de niveaux hiérarchiques du tableau de bord, des cas de service qui sont déterminés comme ayant un impact sur les un ou plusieurs KPI apparentés associés au niveau hiérarchique inférieur suivant de la pluralité de niveaux hiérarchiques et qui satisfont le au moins un critère de filtrage sélectionné.

4. Procédé selon l'une quelconque des revendications 1 à 3, comprenant en outre :
le fait de déterminer si un ou plusieurs des cas de service qui sont déterminés comme ayant un impact sur les un ou plusieurs KPI apparentés associés au niveau hiérarchique inférieur suivant de la pluralité de niveaux hiérarchiques se rapportent à une cause fondamentale de l'impact déterminé ; et
lorsqu'un ou plusieurs des un ou plusieurs cas de service affichés au niveau hiérarchique inférieur suivant de la pluralité de niveaux hiérarchiques se rapportent à un cas fondamental de l'impact identifié, l'affichage de la cause fondamentale sur le tableau de bord.

5. Procédé selon l'une quelconque des revendications 1 à 4, comprenant en outre :
le fait de déterminer si un ou plusieurs des cas de service qui sont déterminés comme ayant un impact sur le au moins un KPI qui est associé au niveau hiérarchique particulier de la pluralité de niveaux hiérarchiques se rapportent à une cause fondamentale de l'impact déterminé sur le au moins un KPI qui est associé au niveau hiérarchique particulier de la pluralité de niveaux hiérarchiques ; et
lorsqu'un ou plusieurs des un ou plusieurs cas de service affichés au niveau hiérarchique particulier de la pluralité de niveaux hiérarchiques se rapportent à une cause fondamentale de l'impact identifié sur le au moins un KPI qui est associé au niveau hiérarchique particulier de la pluralité de niveaux hiérarchiques, l'affichage de la cause fondamentale sur le tableau de bord.

6. Procédé selon l'une quelconque des revendications 1 à 5, dans lequel un ou plusieurs des KPI associés au niveau hiérarchique inférieur suivant de la pluralité de niveaux hiérarchiques représentent une mesure de performances d'une zone du bâtiment, qui affecte au moins un KPI associé au niveau hiérarchique particulier de la pluralité de niveaux hiérarchiques.

7. Procédé selon l'une quelconque des revendications 1 à 5, dans lequel un ou plusieurs des KPI associés au niveau hiérarchique inférieur suivant de la pluralité de niveaux hiérarchiques représentent une mesure de performances d'un composant de système de bâtiment, qui affecte au moins un KPI associé au niveau hiérarchique particulier de la pluralité de niveaux hiérarchiques.

8. Procédé selon l'une quelconque des revendications 1 à 5, dans lequel un ou plusieurs des KPI associés au niveau hiérarchique inférieur suivant de la pluralité de niveaux hiérarchiques représentent une mesure de performances d'un composant de système de bâtiment, et au moins un KPI associé au niveau hiérarchique particulier de la pluralité de niveaux hiérarchiques représente une mesure de performances d'une zone qui est desservie par le composant de système de bâtiment.

9. Système destiné à être utilisé dans la surveillance de performances d'un système de bâtiment d'un bâtiment basé sur un ou plusieurs indicateurs de performances clés (KPI), chacun des un ou plusieurs KPI représentant une mesure correspondante de performances du bâtiment, le système de bâtiment incluant une pluralité de composants de système de bâtiment qui sont responsables du maintien des performances du bâtiment, le système étant **caractérisé en ce qu'**il comprend :
un récepteur pour recevoir des données opérationnelles du système de bâtiment ;
un dispositif d'entrée utilisateur ;
un affichage ; et
un processeur couplé fonctionnellement au récepteur, au dispositif d'entrée utilisateur et à l'affichage, le processeur est configuré pour :
générer un tableau de bord sur un affichage, dans lequel le tableau de bord a une pluralité de niveaux hiérarchiques sélectionnables, chacun des niveaux hiérarchiques incluant au moins un KPI associé parmi les un ou plusieurs KPI, le au moins un KPI qui est associé à un niveau hiérarchique particulier dans la pluralité de niveaux hiérarchiques comprenant une agrégation d'un ou plusieurs KPI apparentés associés à un niveau hiérarchique inférieur suivant de la pluralité de niveaux hiérarchiques ;
recevoir un ou plusieurs cas de service, les cas de service se rapportant à une ou plusieurs défaillances dans un ou plusieurs de la pluralité de composants de système de bâtiment du système de bâtiment ;
déterminer un impact, le cas échéant, des un ou plusieurs cas de service sur chacun des un ou plusieurs KPI, dans lequel les cas de service qui sont déterminés comme ayant un impact sur le au moins un KPI qui est associé au niveau hiérarchique particulier de la pluralité de niveaux hiérarchiques comprend une agrégation d'un ou plusieurs cas de service déterminés comme ayant un impact sur les un ou plusieurs KPI apparentés associés au niveau hiérarchique inférieur suivant de la pluralité de niveaux hiérarchiques ;
recevoir une entrée utilisateur, via le dispositif d'entrée utilisateur, une première entrée utilisateur sélectionnant le niveau hiérarchique particulier de la pluralité de niveaux hiérarchiques du tableau de bord ;
en réponse à la première entrée reçue, afficher au niveau hiérarchique particulier de la pluralité de niveaux hiérarchiques du tableau de bord :
le au moins un KPI associé au niveau hiérarchique particulier de la pluralité de niveaux hiérarchiques du tableau de bord ;
les un ou plusieurs cas de service qui sont déterminés comme ayant un impact sur le au moins un KPI associé au niveau hiérarchique particulier ;
recevoir une deuxième entrée utilisateur, via le dispositif d'entrée utilisateur, la deuxième entrée utilisateur sélectionnant le niveau hiérarchique inférieur suivant de la pluralité de niveaux hiérarchiques du tableau de bord ;
en réponse à la deuxième entrée reçue, afficher au niveau hiérarchique inférieur suivant la pluralité de niveaux hiérarchiques du tableau de bord :
les un ou plusieurs KPI apparentés associés au niveau hiérarchique inférieur suivant de la pluralité de niveaux hiérarchiques ;
les un ou plusieurs cas de service qui sont déterminés comme ayant un impact sur les un ou plusieurs KPI apparentés associés au niveau hiérarchique inférieur suivant de la pluralité de niveaux hiérarchiques.

10. Système selon la revendication 9, comprenant en outre :
la réception d'une troisième entrée utilisateur sélectionnant au moins un d'une pluralité de critères de filtrage ;
le filtrage des un ou plusieurs cas de service sur la base du au moins un critère de filtrage sélectionné de la pluralité de critères de filtrage ; et
en réponse à la première entrée utilisateur, l'affichage, au niveau hiérarchique particulier de la pluralité de niveaux hiérarchiques du tableau de bord, des cas de service qui sont déterminés comme ayant un impact sur le au moins un KPI associé au niveau hiérarchique particulier et qui satisfont le au moins un critère de filtrage sélectionné.

11. Système selon l'une quelconque des revendications 9 ou 10, dans lequel le processeur est en outre configuré pour détecter une ou plusieurs défaillances via les données opérationnelles reçues du système de bâtiment, et pour générer un ou plusieurs cas de service pour corriger les une ou plusieurs défaillances détectées.

12. Procédé selon la revendication 1, comprenant en outre :
la réception d'une entrée utilisateur supplémentaire sélectionnant un KPI à l'un des niveaux hiérarchiques du tableau de bord, indiquant que l'utilisateur souhaite des informations supplémentaires concernant le KPI sélectionné ;
en réponse à l'entrée utilisateur supplémentaire, l'affichage du niveau hiérarchique inférieur suivant de la pluralité de niveaux hiérarchiques du tableau de bord, le niveau hiérarchique inférieur suivant fournissant des informations supplémentaires concernant le KPI sélectionné, incluant un ou plusieurs cas de service qui sont déterminés comme ayant un impact sur le KPI sélectionné ;
la réception d'une deuxième entrée utilisateur supplémentaire sélectionnant l'un des cas de service ; et
en réponse à la deuxième entrée utilisateur, l'affichage d'informations supplémentaires concernant le cas de service sélectionné.

13. Procédé selon la revendication 12, dans lequel les informations supplémentaires fournies par le niveau hiérarchique inférieur suivant de la pluralité de niveaux hiérarchiques incluent une pluralité de sous-KPI sélectionnables qui sont apparentés au KPI sélectionné ;
la réception d'une entrée utilisateur supplémentaire sélectionnant un sous-KPI particulier, et en réponse, l'affichage d'un niveau de tableau de bord supplémentaire qui fournit des informations supplémentaires concernant le sous-KPI sélectionné incluant un ou plusieurs cas de service qui sont identifiés comme ayant un impact sur le sous-KPI sélectionné.

14. Système selon la revendication 9, dans lequel le processeur est en outre configuré pour :
recevoir une entrée utilisateur supplémentaire sélectionnant un KPI à l'un des niveaux hiérarchiques du tableau de bord, indiquant que l'utilisateur souhaite des informations supplémentaires concernant le KPI sélectionné ;
en réponse à l'entrée utilisateur supplémentaire, afficher le niveau hiérarchique inférieur suivant de la pluralité de niveaux hiérarchiques du tableau de bord, le niveau hiérarchique inférieur suivant fournissant des informations supplémentaires concernant le KPI sélectionné, incluant un ou plusieurs cas de service qui sont déterminés comme ayant un impact sur le KPI sélectionné ;
recevoir une deuxième entrée utilisateur supplémentaire sélectionnant l'un des cas de service ; et
en réponse à la deuxième entrée utilisateur, afficher des informations supplémentaires concernant le cas de service sélectionné.

15. Système selon la revendication 14, dans lequel les informations supplémentaires fournies par le niveau hiérarchique inférieur suivant de la pluralité de niveaux hiérarchiques incluent une pluralité de sous-KPI sélectionnables qui sont apparentés au KPI sélectionné ;
recevoir une entrée utilisateur supplémentaire sélectionnant un sous-KPI particulier, et en réponse, afficher un niveau de tableau de bord supplémentaire qui fournit des informations supplémentaires concernant le sous-KPI sélectionné incluant un ou plusieurs cas de service qui sont identifiés comme ayant un impact sur le sous-KPI sélectionné.
